# EUROPÄISCHE PATENTSCHRIFT

(11) **EP 2 084 654 B1**
(45) Veröffentlichungstag und Bekanntmachung des Hinweises auf die Patenterteilung: **17.10.2012**
(21) Anmeldenummer: 07720147.3
(22) Anmeldetag: 15.05.2007
(51) Int. Cl.: G06K 19/077, B42D 15/10

(54) **FLEXIBLER SCHICHTAUFBAU MIT INTEGRIERTEM SCHALTKREIS**
FLEXIBLE LAYER STRUCTURE WITH AN INTEGRATED CIRCUIT
STRUCTURE MULTICOUCHE SOUPLE À CIRCUIT INTÉGRÉ

(30) Priorität: 17.05.2006 CH 800062006
(43) Veröffentlichungstag der Anmeldung: 05.08.2009
(73) Patentinhaber: Landqart, 7302 Landquart (CH)
(72) Erfinder: BÜRKI, Roman, 7270 Davos Platz (CH); BÖCK, Josef, 9423 Altenrhein (CH)
(74) Vertreter: Bremi, Tobias Hans
(86) Internationale Anmeldenummer: PCT/CH2007/000250
(87) Internationale Veröffentlichungsnummer: WO 2007/131383

(56) Entgegenhaltungen:
- EP-A- 1 547 806
- EP-A- 1 559 832
- EP-A1- 1 628 243
- WO-A-2006/005396
- DE-A1- 19 617 621
- US-A- 5 879 502

## Beschreibung

### TECHNISCHES GEBIET

Die vorliegende Erfindung betrifft eine flexible Mehrschichtstruktur mit RFID-Chip und Antenne, wobei RFID-Chip und Antenne derart in die Mehrschichtstruktur integriert sind, dass sie nicht auftragen. Weiterhin betrifft die vorliegende Erfindung ein Verfahren zur Herstellung solcher Mehrschichtstrukturen, sowie insbesondere Verwendungen solcher Mehrschichtstrukturen als Einband für Reisepässe.

### STAND DER TECHNIK

Das generell erhöhte Sicherheitsbedürfnis im internationalen Reiseverkehr erfordert eine Erhöhung der Absicherung von Reisedokumenten, und insbesondere der Reisepässe. Im wesentlichen ausgehend von den Vereinigten Staaten werden Reisepässe verlangt, welche automatisch elektronisch ausgelesen werden können, um biometrische Daten abfragen und überprüfen zu können.

Entsprechend werden Reisepässe mit so genannten RFID-Chips (RFID: radio frequency identification device) ausgestattet, welche kontaktlos ausgelesen werden können. Solche Chips werden entweder in der Umschlaghülle (Einband) des Passes eingebettet, oder aber der Pass verfügt über eine einzelne in der Regel spezifisch dafür vorgesehene, im wesentlichen steife Seite, zum Beispiel aus Polycarbonat, in welche der Chip eingelassen ist. Letzteres ist beispielsweise in der WO 2005/090091 beschrieben.

Problematisch in diesem Zusammenhang ist die Tatsache, dass traditionell solche Umschläge, welche normalerweise über eine äusserste Schicht aus Kunststoff verfügen, welche beispielsweise eine Leder-ähnliche Oberfläche aufweist, aus Papier gefertigt werden. Der gesamte Reisepass soll nun einerseits flexibel sein (wird häufig in der Hosentasche getragen) andererseits soll er aber den RFID-Chip aufnehmen und normalerweise auch noch eine ausgedehnte Antenne. Das elektronische Bauteil soll dabei möglichst nicht sichtbar und auch nicht fühlbar und geschützt sein.

Werden solche Strukturen auf Basis von einfachen Papieren ohne spezifische Massnahmen aufgebaut, so verfügen sie entweder über eine ungenügende Schutzwirkung für den Chip respektive die Antenne, sind aber genügend flexibel, oder aber sie sind vergleichsweise steif und entsprechend schützen sie den Chip, sie sind aber für die gängige Benutzung eines Reisepasses nicht geeignet, was sich unter anderem dadurch äussert, dass sich die Deckseiten nicht wirklich zusammenlegen lassen sondern immer wieder aufspringen.

Entsprechend wurde eine Vielzahl von Versuchen unternommen, derartige Mehrschichtstrukturen auf Basis von technischen Papieren zu verbessern. So beispielsweise die WO 02/089052, in welcher eine Struktur auf Basis von mehreren Papierschichten vorgeschlagen wird, welche offenbar mechanischen und thermischen Belastungen besonders gut gewachsen ist. Einzelne der Papierlagen werden dabei mit einem Harz vollständig getränkt und der Chip wird in eine Aussparung eingepasst. Ähnliche Strukturen werden in der WO 04/012228 sowie in der WO 2005/027033 offenbart.

Bei Aufbauten, bei denen der Chip in eine Aussparung eingepasst wird, wird oft so vorgegangen, dass die Aussparung höher ist als die Bauhöhe des Chips. Es kommt dann aber zwangsläufig bei den Verfahren nach dem Stand der Technik zu einem bleibenden Hohlraum zwischen Chip und Decklage, der zwar hinsichtlich Druckbelastung Vorteile haben kann, der Chip ist in einem solchen Aufbau aber nur unzureichend vor Biegebeanspruchung geschützt, und der Hohlraum ist eine Schwachstelle, von der aus unter mechanischer Beanspruchung die Struktur geschädigt werden kann.

In der WO 2005/088529 wird vorgeschlagen, den Chip in oder auf einem Träger aus Kunststoff (Kunststofffolie) anzuordnen, welcher auf beiden Seiten von einer Papierlage bedeckt ist.

Aus der EP-A-1 547 806, das als nächstliegenden Stand der Technik gesehen wird, ist eine Identifikationskarte, in welche ein Chip eingebettet sein kann, bekannt. Dabei wird vorgeschlagen, dass es möglich ist, einen derartigen Chip an die gewünschte Position zu legen und anschliessend in ein Harz einzubetten. Als Ersatz für dieses Einbetten in ein Harz wird u.a. vorgeschlagen, den Chip auf eine Schicht aufzulegen, welche durch einen porösen Harzfilm, einen porösen Harzschwamm oder ähnliches gegeben ist. Unter anderem wird auch vorgeschlagen, den Chip auf ein non-woven aufzulegen, wobei aber nicht angegeben wird, wie diese Schicht mit den anderen Schichten verbunden wird respektive der Chip in der Schicht befestigt wird. Des weiteren geht es bei dieser Identifikationskarte um eine steife Struktur, das heisst die verwendeten Schichten respektive der resultierende Datenträger sind hochgradig biegesteif.

Die US 5,879,502 beschreibt eine Kreditkarte, welche ebenfalls biegesteif sein soll, und in welche ein Chip eingebettet werden kann. Unter anderem wird dabei vorgeschlagen, den Chip zwischen zwei Schichten aus einem non-woven anzuordnen, welche mit einem Harz imprägniert sind. Anschliessend wird dieses Harz, welches ausdrücklich vernetzbar respektive polymerisierbar ist, vollständig ausgehärtet und so die gewünschte hohe Steifigkeit der Kreditkarte gewährleistet.

Bei der ein Verfahren zur Herstellung eines Laminats zur Herstellung einer Chipkarte betreffenden DE-A-196 17 621 wird ebenfalls vorgeschlagen, einen Mikrochip einzubetten. Dabei wird erwähnt, dass eine mittlere Schicht dieses Laminats ein Schaum sein kann oder ein Vlies. Die Fasern eines derartigen Vlieses können dabei gemäss diesem Dokument mit einem schmelzbaren Werkstoff beschichtet sein respektive vor der Verwendung des Vlieses kann dieses mit beispielsweise PVC besprüht werden.

Die EP 1547806 beschreibt eine Mehrschichtstruktur mit einem Basismaterial mit einer ersten Lage aus Polyester, und einer zweiten darauf liegenden Lage. Die erste Lage verfügt zudem über eine dritte Bildaufnahmeschicht um Informationen oder ein Bild aufzunehmen sowie wenigstens eine Schicht mit einem UV-Absorber dazwischen. Eine weitere weiche Zwischenschicht kann zwischen der Bildaufnahmeschicht angeordnet sein. Ein RFID-Chip und eine Antenne können dabei in eine solche Schichtstruktur Eingebettet sein. Eine der Schichten kann aus einem Vliesstoff bestehen, dessen Hohlräume mit einem Kleber im wesentlichen gefüllt sind.

Die US 5879502 betrifft ein Herstellungsverfahren für einen elektronischen Baustein, bestehend aus einer in einem aus synthetischem Material bestehenden Träger eingekapselten oder eingebetteten, elektronischen Schaltung, wobei dieser Träger zwei im wesentlichen ebene, parallele Hauptseiten aufweist; das Dokument betrifft auch den erwähnten, gemäß einem bestimmten Format, insbesondere dem Format einer Kreditkarte, geschnittenen Baustein.

Die DE 101617621 betrifft ein Verfahren zum Herstellen eines Laminats mit mindestens drei aufeinanderfolgenden Schichten und mindestens einem teilweise in die mittlere der drei Schichten eingebetteten funktionalen Bauteil, beispielsweise Chip. Ferner betrifft das Dokument die Verwendung nachgiebigen Materials als mittlere von drei aufeinanderfolgenden Schichten bei der Herstellung eines Laminats. Schließlich betrifft das Dokument ein Laminat mit mindestens drei aufeinanderfolgenden Schichten.

Die WO 2006/005396 betrifft ein Ausweisdokument in Buchform mit elektronischem Datenträger sowie eine in den Bereich des Rückens und/oder Deckels des Ausweisdokumentes integrierte Anordnung aus dem elektronischen Datenträger in Verbindung mit einer Antenneneinrichtung für eine kontaktlose Datenübertragung.

### DARSTELLUNG DER ERFINDUNG

Der Erfindung liegt demnach u.a. die Aufgabe zugrunde, eine verbesserte Mehrschichtstruktur insbesondere bevorzugt zur Verwendung als äusseren Deckeinband für einen Reisepass oder als Einlageseite für einen Reisepass (sog. Inlay oder Datapage), vorzuschlagen, welche die Nachteile des Standes der Technik wenigstens teilweise überwinden kann.

Die Lösung dieser Aufgabe wird gemäß Anspruch 1 erreicht, und insbesondere dadurch, dass bei einer flexiblen Mehrschichtstruktur mit RFID-Chip und Antenne, wobei RFID-Chip und Antenne derart in die Mehrschichtstruktur integriert sind, dass sie nicht auftragen (keine fühlbare Verdickung im Bereich des Chip oder der Antenne), wenigstens eine der Schichten aus einem Vliesstoff gebildet wird, dessen Hohlräume mit einem flexiblen thermoplastischen Kleber im wesentlichen befüllt sind.

Der Kern der Erfindung besteht somit darin, an Stelle eines Papiers oder einer Kunststofffolie ein völlig anderes Material zu verwenden, welches sich mit einem Kleber vollständig oder im wesentlichen vollständig, d.h. bevorzugt zu wenigstens 90% der Hohlräume, befüllen lässt, ohne dass es danach seine Flexibilität vollständig verliert. Wird ein Papier verwendet, stellt sich nämlich das Problem, dass unter anderem aufgrund der vorhandenen Wasserstoffbrücken ein Tränken mit einem Kleber entweder dazu führt, dass das Papier vollständig steif wird, oder dass u.a. wegen der in Papier vorhandenen Füllstoffe eine brüchige Struktur entsteht, welche nicht nur zwischen aneinander grenzenden Schichten sondern auch innerhalb der Schichten beim Biegen oder Knicken irreversiblen Schaden nimmt. Überraschenderweise zeigt es sich, dass diese Probleme gelöst werden können, indem ein Vliesstoff verwendet wird, welcher mit einem thermoplastischen Kleber respektive Füllstoff oder Kunststoff vollständig oder nicht ganz vollständig getränkt ist, wobei der Kleber respektive Kunststoff derart gewählt ist, dass er auch nach längerer Zeit in seinem Verbund mit dem Vliesstoff flexibel bleibt.

Ein Vliesstoff, wie er in einem erfindungsgemässen Aufbau Verwendung finden kann, unterscheidet sich von einem Papier, wie es in ähnlichen Aufbauten im Stand der Technik verwendet wird, in mehreren Eigenschaften. Ein Papier ist eine fasrige, flächige Struktur, wobei die verwendeten Fasern Cellulosefasern natürlichen Ursprungs sind. Zum Einsatz kommen beispielsweise Zellstofffasern aus Laub- und Nadelhölzern oder auch Gräsern. Auch Baumwollfasern finden Verwendung, speziell in Papieranwendungen, bei denen es auf eine hohe Lebensdauer ankommt. Die Faserlänge in Papieren beträgt typischerweise 0.2-2 mm, in extrem langfasrigem Papier wie ungemahlenen Langfaser-Zellstoffpapieren allenfalls höchstens 3 oder 3.5 mm. Für Sicherheitspapiere auf Baumwollbasis, wie sie in Passanwendungen eingesetzt werden, beträgt die Faserlänge typischerweise 1 mm (Faserlängen entsprechen Mittelwerten).

Demgegenüber handelt es sich bei einem Vlies, wie es im vorliegenden erfindungsgemässen Aufbau Verwendung findet, um ein flächiges Gebilde mit zumindest einem Anteil an Synthetikfasern, normalerweise besteht das Vlies im wesentlichen nur aus Synthetikfasern. Die Synthetikfasern weisen eine Faserlänge von mindestens 4 mm Länge auf. Die Fasern können auch wesentlich länger sein, im Bereich von 10-20 mm. Im Fall von Spinnvliesen sind die Fasern gar noch länger und oft in derselben Grössenordnung wie die Abmessungen des Vliesstückes selber.

Es kann sich beim Vlies um ein unverbundenes Vlies oder ein verbundenes Vlies handeln. Das Vlies kann durch thermische Einwirkung verbunden sein (in der Regel wenigstens teilweises Verschmelzen einzelner Fasern) und/oder es kann mechanisch/stoffschlüssig verbunden sein, beispielsweise indem die Fasern miteinander wenigstens teilweise verklebt werden. Vliese können so zum Beispiel zusätzlich einen Binder enthalten, der dem Faserverbund zusätzliche Festigkeit verleiht. Der Binder wird typischerweise über ein Eintauchen des Vlieses in einen Binder in ein derartiges Vlies eingebracht und bedeckt danach die Fasern wenigstens teilweise in einer Fasern überbrückenden Art und Weise.

Durch die im Vergleich zu einem Vlies relativ geringe Faserlänge eines Papiers kommt es bei mechanischer Belastung des Papiers bereits bei relativ geringen Dehnungen zu einem Abgleiten der Fasern gegeneinander und damit zu einer Trennung des Faserverbundes und zur Rissbildung. Auch in einem getränkten Papier geschieht diese Abscherung der Fasern bei relativ geringen Dehnwerten, was zu einer Risseinleitung im Verbund führt.

In einem Vlies mit definitionsgemäss relativ langen Fasern führt eine mechanische Belastung ebenfalls zu einer Dehnung, jedoch nicht zu einer vollständigen Trennung der Fasern voneinander. Die langen Fasern liegen im Vlies in verschlungener Form vor, so dass eine Dehnung nur zu einer Streckung des gesamten Faserverbundes führt, selten aber zu einer Trennung der einzelnen Fasern. Somit führt eine mechanische Belastung in einem getränkten Vlies auch wenn überhaupt wesentlich weniger rasch zu einer Risseinleitung, als dies in einem getränkten Papier der Fall ist.

Die Materialeigenschaften der Vliesfasern sind weiter für die positiven mechanischen Eigenschaften des erfindungsgemässen Verbundes verantwortlich. Wie aus Tabelle 1 ersichtlich, besitzen Zellulosefasern eines Papieres (als Beispiel die hochfeste Baumwollfaser) Reissdehnungswerte von 6-10%, Synthetikfasern wie sie in den besprochenen Vliesen verwendet werden, besitzen demgegenüber Reissdehnungswerte von 20-105%. Moderne Fasermaterialien für Spinnvliese erreichen gar Reissdehnungswerte von mehreren 100 %.

**Tabelle 1**

| **Fasertyp** | **Modul¹⁾** | **Reissfestigkeit²⁾** | **Reissdehnung³⁾** | |
|---|---|---|---|---|
| Baumwolle | 30-60 | 35-70 | 6-10 | |
| Polyamid | 60-90 | 70-100 | 30-80 | |
| Polyester | 70-120 | 95-100 | 100-105 | |
| Polypropylen | 30-50 | 22-55 | 70-100 | |
| Polyethylen | 15-50 | 32-65 | 20-60 | |
| | | | | |

| | | | | |
|---|---|---|---|---|
| 1) Festigkeit, die sich ergibt, wenn die an den quasilinearen Bereich der Kraft-Dehnungs-Kurve angelegte Tangente bis zur Dehnung von 100% verlängert wird. 2) bei Normalklima, in daN/mm² 3) in % bei Normalklima Quelle: Reutlinger Fasertafel 1974, ITR Institut für Textiltechnik, Reutlingen, Deutschland | | | | |

Bevorzugtermassen ist keine der Vliesschichten in der Mehrschichtstruktur von einer Dicke, welcher grösser ist als die gesamte Höhe des Chip. Insbesondere bevorzugt wird auf die über die Höhe des Chips unterschiedliche Breitenausdehnung des Chips (beispielsweise lead frame mit grosser Breite und mold compound mit geringer Breite) angepasst, indem die Höhe des Chips unter Zuhilfenahme von wenigstens zwei Vliesschichten aufgenommen wird, welche in Anpassung an die unterschiedliche Breitenausdehnung über unterschiedliche Stanzungen verfügen, so dass eine möglichst formbündige Anordnung zwischen dem Chip und den diesen umgebenden Schichten resultiert. Vorzugsweise verfügen die den Chip umgebenden Schichten jeweils über durchgängige Stanzungen , das heisst über Löcher, in welche der Chip eingreift. Es ist bevorzugtermassen nicht vorgesehen, in einer der Schichten nur beispielsweise Ausnehmungen vorzusehen, welche nicht über die gesamte Dicke der Schicht im Sinne von Durchgangsöffnungen ausgebildet sind, und in welche der Chip eingelegt werden soll.

Gemäss einer ersten bevorzugten Ausführungsform sind die Hohlräume im Endprodukt zu wenigstens 90% befüllt, bevorzugt zu wenigstens 95%. Mit anderen Worten ist wenigstens das Endprodukt beinahe vollständig mit dem Kleber aufgefüllt, das heisst der Vliesstoff verfügt nur noch über ein Minimum an mit Luft gefülltem Volumen, während der Rest des Volumens mit dem Kleber befüllt ist.

Sämtliche den RFID-Chip und die Antenne umgebenden Schichten bestehen aus einem Vliesstoff, dessen Hohlräume mit einem flexiblen Kleber im wesentlichen befüllt sind. Auf diese Weise kann die optimale Schutzwirkung der Struktur gewährleistet werden. Die gewünschte Flexibilität kann insbesondere bevorzugt dadurch sichergestellt werden, dass die Fasern des Vliesstoffes aus einem Kunststoff gebildet werden, insbesondere bevorzugt aus einem Polymer. In Frage kommen dabei Polyolefine wie PE, PP, Polyester wie PET, PBT, co-Polyester, Polyamide wie PA-6, PA6.6, PA-12, PVC, PU, PS, PMMA, PC, PVA oder Blends oder Mischungen davon, wobei gegebenenfalls auch mit spezifischen Fasern aus nicht polymeren Materialien ergänzt werden kann. Als Faserstoffe, ggf. auch in Mischung mit den bereits genannten Materialien, kommen weiter in Frage Glasfasern, Kohlefasern, Aramidfasern, Teflonfasern, Viskosefasern, Cellulosefasern sowie Mischungen davon.

Eine gezielte Beweglichkeit in einer bestimmten Richtung (beispielsweise eine erhöhte Beweglichkeit senkrecht zur Richtung des Knicks im Rücken des Reisepasses) kann gemäss einer weiteren bevorzugten Ausführungsform der Erfindung erhalten werden, indem wenigstens eine der Schichten aus einem anisotropen Vliesstoff besteht. Bevorzugtermassen ist dabei die Faserrichtung senkrecht zu jener Richtung, in welcher eine erhöhte Beweglichkeit respektive Flexibilität gewährleistet werden soll. Beim genannten Beispiel eines Reisepasses ist entsprechend die bevorzugte Richtung der Fasern im Vliesstoff im wesentlichen parallel zur gebundenen Kante des Reisepasses auszurichten, dies insbesondere bei dicken Schichten. Bei einem mehrschichtigen Aufbau ist es auch möglich, in Bereichen, in denen erhöhte Flexibilität gefordert ist, einzelne Schichten auszusparen (beispielsweise für den Rücken eines Covers im Bereich des Falzes oder bei einem Inlay/Inlet dort, wo dieses im Befestigungsbereich anschliessend eine Beweglichkeit erforderlich macht).

Die insbesondere für Reisepässe besonders geeignete Mehrschichtstruktur nach der Erfindung wird zur Verfügung gestellt, indem vier Schichten aus einem Vliesstoff vorhanden sind, deren Hohlräume mit einem flexiblen Kleber im wesentlichen befüllt sind. Dabei ist eine obere erste Vliesschicht angeordnet, welche frei von Aussparungen ist, es ist eine obere zweite Vliesschicht angeordnet, welche eine Aussparung aufweist, in welcher ein erster Teilbereich des RFID-Chips angeordnet ist, es ist eine untere erste Vliesschicht angeordnet, welche eine Aussparung aufweist, in welcher der restliche Teilbereich des RFID-Chips angeordnet ist, und es ist eine untere zweite Vliesschicht angeordnet, welche frei von Aussparungen ist. Bevorzugtermassen sind dabei sämtliche Schichten aus dem gleichen Vlies-Material, ggf. in einer Kombination von isotropen und anisotropen Schichten auf gleicher Faserbasis, gebildet, und bevorzugt sind die Vliesschichten sämtlich mit dem gleichen flexiblen Kleber befüllt und über diesen stoffschlüssig miteinander verbunden.

Um dem Drucker respektive Buchbinder zum Beispiel in Form eines Bogens eine fertige Lösung zur Verfügung zu stellen, ist es möglich, oberhalb der oberen ersten Vliesschicht ein Umschlagmaterial anzuordnen, welches mit der oberen ersten Vliesschicht stoffschlüssig verbunden ist (ergibt die Aussenseite des Passes), wobei es sich beim Umschlagmaterial bevorzugt um ein Kunststoffmaterial handelt, welches an der oberen Oberfläche versiegelt ist und/oder eine Lederimitation darstellt und wobei das Umschlagmaterial insbesondere bevorzugt eine Dicke im Bereich von 200-450 Mikrometer aufweist.

Grundsätzlich ist es dabei möglich, an einem solchen Umschlagmaterial eine Prägung vorzunehmen. Diese Prägung kann am Umschlagmaterial bereits vorgenommen sein, das heisst das Umschlagmaterial kann dem Herstellungsprozess für die Herstellung der Mehrschichtstruktur in bereits geprägter Form zugeführt werden. Alternativ ist es möglich, die Prägung des Umschlagmaterials im Rahmen des Herstellungsverfahrens der Mehrschichtstruktur durchzuführen, entweder kurz vor oder während der Zuführung des Umschlagmaterials oder aber auch nach Herstellung der (teilweisen) Mehrschichtstruktur.

Um die Innenseite ebenfalls in einer Form zur Verfügung zu stellen, auf welche ein Vorsatzpapier, welches anschliessend die Innenseite des Passes bilden wird, aufgeklebt werden kann (beispielsweise wie üblich unter Zuhilfenahme eines Weissleim), ist es möglich und bevorzugt, unterhalb der unteren zweiten Vliesschicht eine Papierschicht anzuordnen, welche mit der unteren zweiten Vliesschicht stoffschlüssig verbunden ist, und welche bevorzugt eine nach unten offenporige Struktur aufweist und so die Haftungsvermittlung mit einem Weissleim ermöglicht, Dabei weist die Papierschicht bevorzugtermassen eine Dicke im Bereich von 40-70 µm auf, dies bevorzugtermassen bei einem ursprünglichen Flächengewicht (d.h. Flächengewicht vor Einbringung von Kleber) von 15-70 g/m², insbesondere bevorzugt von 20-40 g/m². Die Papierschicht ist bevorzugtermassen mit einem lösungsmittelhaltigen (organisches Lösungsmittel) Kleber mit der daran grenzenden Schicht aus Vliesstoff verbunden, wobei insbesondere bevorzugt die gleiche Kleberbasis verwendet wird, wie bei den anderen Vliesstoff-Schichten, einfach in lösungsmittelhaltiger Form. Die Kleberbeschichtung ist vorzugsweise so ausgeführt, dass sie nicht auf die der Beschichtungsseite abgewandten Papieroberfläche durchdringt, so dass die Papiereigenschaften, insbesondere für den dort aufzubringenden Weissleim zur Befestigung am Vorsatzpapier, auf dieser Seite weitgehend erhalten bleiben.

Bei der Papierschicht handelt es sich bevorzugterweise um ein Sicherheitspapier, welches mindestens ein Sicherheitsmerkmal enthält. Bevorzugterweise beinhaltet das Sicherheitspapier ein Wasserzeichen. Die Papierlage kann zusätzlich bedruckt sein.

In einer weiteren bevorzugten Ausführungsform ist die Seite des Wasserzeichenpapiers, welches diese Papierschicht bildet, und welche auf das Umschlagmaterial (d.h. in Kontakt zu einer Vliesschicht) zu liegen kommt, dunkel bedruckt oder eingefärbt. Oder es ist möglich, die Seite des Umschlagmaterials, auf welche das Wasserzeichenpapier zu liegen kommt dunkel bedruckt oder eingefärbt auszugestalten, wodurch sich das Wasserzeichen deutlich und kontrastreich abhebt.

Ebenfalls möglich ist es, die Papierschicht dunkel (z.B. schwarz) einzufärben. Wird anschliessend ein Vorsatzpapier verwendet, welches ein Wasserzeichen aufweist, so ergibt sich ein erhöhter Kontrasteffekt.

Eine Papierlage wird vorzugsweise dann vorgesehen, wenn das Umschlagmaterial mit einem anderen Papierträger verbunden werden soll, beispielsweise mit einem Vorsatzpapier.

Es ist auch möglich, eine Mehrschichtstruktur vorzusehen, welche zur Herstellung eines Reisepasses ohne Verwendung eines Vorsatzpapiers geeignet ist. In diesem Fall ist z.B. die oben beschriebene Papierlage der Mehrschichtstruktur anschliessend direkt die Innenseite des Umschlags des fertigen Passes. Für diese Situation kann diese Papierlage bedruckbar oder bereits bedruckt ausgestaltet sein, und sie kann wiederum Sicherheitsmerkmale wie beispielsweise Wasserzeichen etc. aufweisen.

Alternativ ist es möglich, anstelle eines konventionellen Vorsatzpapiers beim Herstellungsprozess des Reisepasses ein Papier zu verwenden, welches bereits dazu vorgesehen ist, auf eine Mehrschichtstruktur, welche dann keine Papierlage aufweist, aufgebracht zu werden. Für diesen Fall wird ein Vorsatzpapier verwendet, welches auf der dem Umschlag zugewandten Seite über eine entsprechende Vorbereitung zur direkten Anbindung an die Mehrschichtstruktur aufweist. Möglich ist beispielsweise ein Vorsatzpapier in Form eines Papiers, welches auf der Aussenseite mit einem Kleber beschichtet oder soweit getränkt ist, dass die Innenseite in ihren Papiereigenschaften i.w. davon nicht betroffen ist. Dabei wird insbesondere bevorzugt die gleiche Kleberbasis verwendet, wie bei den anderen Vliesstoff-Schichten, einfach in lösungsmittelhaltiger Form, so dass eine optimale Anbindung an die Mehrschichtstruktur erfolgen kann, beispielsweise direkt und ohne Verwendung eines weiteren Klebers durch einfache Anwendung von Druck und/oder Temperatur.

Besonders bei der Verwendung für einen Reisepass erweist sich folgende Auslegung der einzelnen Schichten in Kombination oder jeweils einzeln als vorteilhaft:
- Obere erste Vliesschicht und/oder untere zweite Vliesschicht: Dicke im Bereich von 60 - 150 Mikrometer (jeweils ursprüngliche Dicke vor dem Fusionsprozess), insbesondere bevorzugt im Bereich von 90-125 µm (spezifisch z.B. 100-110 µm), bevorzugtermassen bei einem Flächengewicht im Bereich von 8 - 40 g/m², insbesondere bevorzugt im Bereich von 15-25 g/m², wobei sich diese Flächengewichte auf einen Vliesstoff beziehen, welcher noch nicht mit Kleber gefüllt ist. Bereits befüllter aber noch nicht fusionierter Vliesstoff (das heisst mit einer Befüllung im Bereich von 70-85 %, z.B. als Halbzeug) ist bevorzugt in einem Flächengewicht von 50-90 g/m² vorgegeben. Diese Dimensionierung bezieht sich insbesondere bevorzugt auf Vliesstoffe mit endlosen Fasern, d.h. Spinnvliese. Diese Vliesschichten sind bevorzugtermassen nicht orientiert, das heisst deren Fasern verfügen nicht oder nur unwesentlich über eine bevorzugte statistische Orientierung, sondern sind im wesentlichen statistisch in ihrer Orientierung in der Ebene der Schicht gleich verteilt.
- Obere zweite Vliesschicht und/oder untere erste Vliesschicht: Dicke im Bereich von 150 - 350 Mikrometer (jeweils ursprüngliche Dicke vor dem Fusionsprozess), insbesondere bevorzugt im Bereich von 200-300 µm (spezifisch beispielsweise im Bereich von 220 - 150 µm), bevorzugtermassen bei einem Flächengewicht im Bereich von 20 - 60 g/m², insbesondere bevorzugt im Bereich von 30-50 g/m², wobei sich diese Flächengewichte auf einen Vliesstoff beziehen, welcher noch nicht mit Kleber gefüllt ist. Bereits befüllter aber noch nicht fusionierter Vliesstoff (das heisst mit einer Befüllung im Bereich von 70-85 %, z.B. als Halbzeug) ist bevorzugt in einem Flächengewicht von 80-150 g/m² vorgegeben. Diese Dimensionierung bezieht sich insbesondere bevorzugt auf Vliesstoffe mit endlosen Fasern, d.h. Spinnvliese. Diese Vliesschichten können bevorzugtermassen orientiert sein, das heisst deren Fasern verfügen über eine bevorzugte statistische Orientierung in der Ebene der Schicht. Diese Orientierung führt im fertigen Produkt zu einer vergleichsweise grösseren Biegesteifigkeit um eine Achse senkrecht zu dieser bevorzugten Orientierung und zu einer vergleichsweise niedrigeren Biegesteifigkeit um eine Achse parallel dazu. Wird beispielsweise die bevorzugte Orientierung dieser beiden (oder auch nur einer davon) Schichten parallel zur Rückenkante eines Reisepasses eingestellt, so kann anschliessend der Reisepass parallel zu Rückenkante leichter durchgebogen werden als in der anderen Richtung.

Es ist auch möglich, Vliesstoffe mit einem höheren Flächengewicht beispielsweise von im Bereich 120-220 g/m² zu verwenden, insbesondere wenn kürzere Fasern und nicht endlose Fasern verwendet werden. Solche Vliesstoffe haben dann eine Dicke im Bereich der oben angegebenen Dicke der zweiten Vliesschicht, und verfügen befüllt über ein Flächengewicht im Bereich von 180-250 g/m².

Bei dem thermoplastischen Kleber handelt es sich gemäss einer bevorzugten Ausführungsform um einen aktivierbaren Kleber (z.B. heat activated adhesive), bevorzugt um einen solchen Kleber, der in erstarrtem Zustand weitgehend flexibel bleibt und nicht glasartig brüchig wird. Mögliche Kleber dieser Art finden sich in der Gruppe der Polyolefine, der Polyurethane, der Polyacrylate und der Polyvinylacetate sowie Mischungen davon.

Bei dem thermoplastischen Kleber handelt es sich gemäss einer weiteren bevorzugten Ausführungsform also um einen aktivierbaren Kleber, bevorzugt um einen lösungsmittelfreien aktivierbaren Kleber, insbesondere bevorzugt um einen wärmeaktivierbaren lösungsmittelfreien Kleber, welcher nicht vollständig aushärtet oder in erstarrtem Zustand weitgehend flexibel bleibt und nicht glasartig brüchig wird und entsprechend die nachhaltige Flexibilität gewährleistet. Unter lösungsmittelfrei ist im Zusammenhang mit der vorliegenden Anmeldung stets zu verstehen, dass der Kleber keine organischen Lösungsmittel aufweist. Er kann aber auf wässriger Basis beruhen. Alternativ ist es auch möglich, einen Kleber zu verwenden, welcher weder ein organisches Lösungsmittel noch Wasser aufweist. Auch ein solcher Kleber ist als lösungsmittelfrei zu verstehen. Solche Kleber werden auch als wässrig oder wasserbasierend bezeichnet. Im Allgemeinen werden auch Kleber als lösungsmittelfrei, wässrig oder wasserfrei bezeichnet, die einen Anteil unter 15% an wasserkompatiblen Lösungsmitteln beinhalten (typischerweise Ethanol, Isopropanol, Aceton u.Ä.). Beim Kleber kann es sich beispielsweise um einen Kleber auf Polyurethan- oder auf Polyacrylat-Basis bevorzugt in Wasser handeln.

Generell ist es möglich, dem Kleber Zusätze zur besseren Lauffähigkeit zuzusetzen. Ebenfalls ist es möglich, den oben genannten Schichten Zusätze zur besseren Bedruckbarkeit zuzusetzen.

Gemäss einer weiteren bevorzugten Ausführungsform wird dem thermoplastischen Kleber ein thermoexpandierbarer Zusatz oder Hohlpigmente zugefügt, so beispielsweise in Form von hohlen oder gefüllten Mikrokugeln oder -körnern, so z.B. Mircopearl^{®} oder Expancel^{®} o.ä.. Dies kann beispielsweise zur Erhöhung der Flexibilität im fertigen Produkt vorteilhaft sein.

Wie bereits erläutert, besteht bevorzugtermassen der Vliesstoff aus Fasern ausgewählt aus der Gruppe folgender Kunststoffe: PE, PP, PET, PA, PBT, PVC oder Mischungen solcher Fasern. Bevorzugt werden Fasern auf Basis von Polyester und/oder Polyacrylat. Ein mögliches Produkt ist beispielsweise das von der Firma Freudenberg Vliesstoffe KG, Deutschland erhältliche Produkt mit dem Namen Viledon^{®}. Auch möglich sind polymere Fasern wie Viskose oder Lyocell.

In einer weiter bevorzugten Ausführungsform wird zwischen der oberen ersten und oberen zweiten Vliesschicht zusätzlich eine Sperrschicht für elektromagnetische Strahlung gelegt oder eine dieser beiden Schichten als derartige Sperrschicht ausgestaltet. Eine solche Schicht kann auch zwischen der oberen ersten Vliesschicht und einem Umschlagmaterial angeordnet sein, oder es ist möglich, das Umschlagmaterial oder eine Schicht desselben als derartige Sperrschicht auszugestalten. Dabei kann es sich um eine Metallfolie, Metallgewebe, Metallvlies handeln oder um ein mit einer leitfähigen Struktur bedrucktes/bedampftes Papier, Vlies oder Gewebe oder um ein Vlies oder Gewebe mit Anteil an metallischen Fäden/Fasern oder um eine andersartig leitfähig hergestellte, flächige Struktur. Diese elektromagnetische Abschirmung hat zum Zweck, ein Auslesen der im Chip gespeicherten Daten von einer Seite her zu verhindern. In einem Endprodukt, beispielsweise einem Reisepass, ist ein Auslesen der Daten somit nur am geöffneten Pass möglich, nicht aber bei geschlossenem Reisepass.

Weiterhin betrifft die vorliegende Erfindung die Verwendung einer Mehrschichtstruktur, wie sie oben erläutert wurde, zur Herstellung eines Tags, eines Buchdeckels, einer Einlage in Kleidungsstücke oder andere Verkaufsartikel für die Sicherheitsanwendungen (Ladenschutz), einer Ausweiskarte, insbesondere aber als Deckmaterial respektive Einband oder als Inlay (auch als Datapage bezeichnet) für einen Reisepass. Entsprechend betrifft die vorliegende Erfindung gleichermassen einen Reisepass mit einem Umschlag aus einer Mehrschichtstruktur, wie sie oben beschrieben wurde.

Insbesondere im Zusammenhang mit der Verwendung als Datapage kann die Mehrschichtstruktur des weiteren eine zusätzliche Schicht, normalerweise wenigstens eine äussere Schicht (oder beidseitige äussere Schichten), beispielsweise als Ersatz für das Umschlagmaterial, aufweisen, welche aus einer mit einem Laser beschreibbaren Folie besteht und/oder in einem Diffusionsverfahren bedruckbar ist.

Weiterhin betrifft die vorliegende Erfindung ein Verfahren zur Herstellung einer solchen Mehrschichtstruktur. Das Verfahren ist dadurch gekennzeichnet, dass wenigstens eine der Schichten aus einem Vliesstoff in entspanntem, ungepresstem Zustand (die Hohlräume sollten frei verfügbar sein, das heisst das Material sollte kurz davor nicht gepresst worden sein) zugeführt wird, dessen Hohlräume mit dem Kleber im flüssigen Zustand zu 70-85 % des Volumens gefüllt werden, und dass bei der Verbindung mit weiteren Schichten und/oder in einem abschliessenden Fusionsprozess der gefüllte Vliesstoff derart gepresst und/oder gegebenenfalls mit Wärme behandelt wird (Lamination), dass die Hohlräume in der fertigen Mehrschichtstruktur zu wenigstens 90% befüllt sind.

Eine bevorzugte Ausführungsform dieses Verfahrens ist dadurch gekennzeichnet, dass die wenigstens eine Schicht aus einem Vliesstoff auf ihrer einen Oberfläche wenigstens teilweise versiegelt wird oder gleich versiegelt zugeführt wird und auf ihrer gegenüberliegenden Oberfläche offenporig ausgebildet ist, und dass die wenigstens eine Schicht mit der offenporigen Oberfläche nach oben zugeführt wird und durch diese mit Kleber befüllt wird. Ein wesentliches Element des Verfahrens ist es, sicherzustellen, dass der Kleber gut in den Vliesstoff eindringen kann. Entsprechend sollte er in einer Menge und bei einer Viskosität eingebracht werden, bei welcher nicht sofort das Vlies vor dem Eindringen zusammen gepresst und damit die Hohlräume vernichtet werden, und auf der anderen Seite muss verhindert werden, dass der Kleber nicht nach unten aus der Schicht heraustreten respektive in darunter liegende Schichten eindringt. Letzteres wird dadurch verhindert, indem, wie bevorzugt, die Unterseite des Vliesstoffes derart "versiegelt" wird oder bereits ist, dass der Kleber nicht nach unten hindurchtreten kann, wenn er von oben zugeführt wird. Um sicherzustellen, dass der Vliesstoff tatsächlich gefüllt und nicht gepresst wird bei der Zuführung des Klebers, kann es von Vorteil sein, die wenigstens eine Schicht aus einem Vliesstoff in wenigstens zwei Schritten, bevorzugt bei einer Dicke von mehr als 150 µm in wenigstens drei Schritten mit Kleber sukzessive zu befüllen.

Ein bevorzugtes Verfahren zur Herstellung einer befüllten Schicht aus Vliesstoff besteht darin, dass zunächst eine Bahn aus einem flächigen Trägermatierial, beispielsweise eine Bahn aus silikonisiertem Papier zugeführt wird. Diese Bahn wird zunächst mit einer Schicht aus Kleber beschichtet. Um eine homogene Beschichtung gewährleisten zu können, erweist es sich dabei als vorteilhaft, diese Beschichtung über einen Rollenauftrag vorzunehmen, wobei zunächst über ein Rakel der Kleber auf die Rolle aufgebracht wird, und anschliessend die Rolle den Kleber auf das Papier aufträgt. Diese Kleberschicht wird zunächst getrocknet, beispielsweise bei einer Temperatur von 120°C. In einem nächsten Schritt wird dieser mit der Kleberschicht beschichtete Träger aufgewärmt (beispielsweise in einem Wärmekalander), und mit einer unbearbeiteten (d.h. beidseitig offenporigen) Bahn aus Vliesstoff in Kontakt gebracht. Dabei wird der Vliesstoff auf der dem beschichteten Träger zugewandten Seite durch die Kleberschicht versiegelt. Nun wird dieser auf der einen Seite versiegelte Vliesstoff von der anderen Seite in einem oder gegebenenfalls mehreren weiteren Schritten sukzessive mit Kleber befüllt, ohne dass der zugeführte Kleber nach unten aus dem Vliesstoff heraustritt. Dies ist dadurch gewährleistet, dass der Vliesstoff auf der Seite, die dem Träger zugewandt ist, versiegelt wurde. Nach jedem dieser Schritte wird die Bahn getrocknet, um das Wasser aus dem Verbund heraustreten zu lassen. Dies geschieht typischerweise in einem Trocknungstunnel bei einer Temperatur von 70-80°C. Bei dickeren Vliesbahnen (typischerweise bei Dicken über 120 µm) erweist sich eine Befüllung in zwei oder mehreren Befüllungsschritten als sinnvoll. So wird beispielsweise ein Vliesstoff von 240 µm Dicke auf einem mit Silikon beschichteten Trägerpapier mit Kleberschicht wie oben beschrieben in einem ersten Befüllungsschritt mit nassem Kleber grösstenteils vollständig befüllt und getrocknet. Durch die Trocknung verringert sich das Befüllungsvolumen, so dass eine Befüllung von typischerweise 30-40 g/m² Kleber resultiert. Bedingt durch den Befüllungs- und Trocknungsprozess sowie den Einfluss von Kapillarkräften und der Schwerkraft sinkt die Befüllung im Vlies im Wesentlichen auf die Seite des Trägerpapiers.

In einem zweiten Befüllungsschritt werden erneut ca. 30-40 g/m² Kleber befüllt. Auf diese Weise resultiert ein zu ca. 70 - 85% befüllter, flächiger Verbund, welcher auf seiner Ober- und Unterseite ausreichend thermoaktivierbaren Kleber aufweist, um im nachfolgenden Prozess mit weiteren, gleichartigen Lagen verbunden zu werden.

Ein nicht vollständig befüllter Verbund erweist sich deshalb als vorteilhaft, weil der Verbund durch das Porenvolumen kompressibel bleibt und der Chip im weiteren Verarbeitungsverlauf schlüssig in den Verbund eingebettet werden kann. Bei der Schichtung mehrerer solcher nicht vollständig befüllter Verbunde kann ausserdem eingeschlossene Luft entweichen, was eine Blasenbildung verhindert.

In einer bevorzugten Ausführungsform ist der Kleber für die verschiedenen Schichten (bevorzugt optisch) unterscheidbar ausgeführt, beispielsweise durch Anfärben mit Farbstoffen. So kann beispielsweise der Kleber zur Ausbildung der Siegelschicht hellblau eingefärbt werden, der Kleber für die erste Befüllung dunkelblau eingefärbt werden, und der Kleber für die zweite Befüllung gelb eingefärbt werden. Diese Einfärbung kann einerseits der Prozesskontrolle (Qualitätskontrolle, beispielsweise Mängel in der Vliesstruktur leicht sichtbar) dienen, kann aber auch als Sicherheitsmerkmal dienen respektive kundenspezifisch oder chargenspezifisch eingesetzt werden. Im oben genannten Fall resultiert ein Verbund, der in der Aufsicht bei korrekter Prozessfiihrung die einheitliche Mischfarbe Grün zeigt, die Schichtung der einzelnen eingefärbten Schichten im Querschnitt aber als Sicherheitsmerkmal erkennen lässt. Des weiteren ist es möglich, durch unterschiedliche Einfärbung wiederum einen Sicherheitseffekt bewirkende Mischfarben zu erzeugen. Ein Querschnitt des Aufbaus lässt im Mikroskop die Schichtung auf einfache Weise erkennen. Als Querschnitt kann im einfachsten Fall die Stanzkante des Umschlags zur zerstörungsfreien Prüfung herbeigezogen werden.

Alternativ oder zusätzlich ist es möglich, einen Teil oder die Gesamtheit der Fasern in einem Vlies einzufärben respektive das Vlies in einem separaten Prozess in einem Tauchbad einzufärben. Auch durch diese Einfärbung des Vlies respektive der dort verwendeten Fasern ist es möglich, unter anderem Qualitätskontrolle zu gewährleisten, zusätzliche Sicherheitsaspekte zu befriedigen, respektive kundenspezifische Wünsche einzubringen. Des weiteren ist es möglich, in einem Vlies oder zwischen Schichten der Mehrschichtstruktur Lichtleiter vorzusehen. Durch Einkopplung von Licht in einen derartigen Lichtleiter in einer Seitenkante und durch das durch den Lichtleiter spezifisch erzeugte Austrittslicht an einer anderen Kante kann eine weitere Sicherheit gewährleistet werden.

Zur Einfärbung der einzelnen Kleberschichten/Vliese können auch UV-, IR- oder VIS-Farbstoffe eingesetzt werden, die beispielsweise im Tageslicht unsichtbar sind, unter UV-Licht oder IR-Licht aber eine charakteristische Fluoreszenzfarbe insbesondere im sichtbaren Bereich, zeigen oder eine charakteristische Absorption oder Reflexion im UV,- IR oder VIS-Bereich zeigen.

Eine weitere bevorzugte Ausführungsform des Verfahrens insbesondere zur Herstellung einer Mehrschichtstruktur für einen Reisepass ist dadurch gekennzeichnet, dass insgesamt wenigstens zwei, bevorzugt wenigstens drei, insbesondere bevorzugt wenigstens vier Schichten aus einem Vliesstoff zugeführt werden, wobei die einzelnen Schichten nacheinander miteinander verbunden werden, indem zunächst eine erste unten liegende und nach unten versiegelte Schicht zugeführt und mit Kleber zu 70-85% befüllt wird, indem anschliessend eine zweite nach unten versiegelte Schicht zugeführt und mit ihrer Unterseite mit der Oberseite der ersten Schicht in Kontakt gebracht wird, und indem anschliessend unter Anwendung von Wärme und/oder Druck eine wenigstens bereichsweise oder punktweise stoffschlüssige Verbindung zwischen der ersten und der zweiten Schicht erzeugt wird, und so fort, wobei bevorzugt in einem abschliessenden Schritt unter Anwendung von Druck, insbesondere bevorzugt zwischen Platten in einem getakteten Prozess oder zwischen einer Rolle und einem mitlaufenden, die Rolle in einem Umfangsbereich umschliessenden Band, die Schichtstruktur derart komprimiert respektive fusioniert wird, dass die Hohlräume in der fertigen Mehrschichtstruktur zu wenigstens 90% befüllt sind.

Gemäss einer bevorzugten Ausführungsform des Verfahrens werden dabei Bahnen von Vliesstoff im Sinne von Halbzeug zugeführt, das heisst Bahnen von Vliesstoff, welche bereits befüllt sind, konkret welche zu 70-85% mit Kleber befüllt sind. Insbesondere bevorzugt werden Bahnen zugeführt, welche, wie oben erläutert, auf einem silikonisierten Papier vorbereitet sind, und welche erst kurz vor der Zusammenführung mit weiteren Bahnen aus Vliesstoff von diesem silikonisierten Trägerpapier getrennt werden. Diese Bahnen können anschliessend zunächst nur punktweise (beispielsweise unter Zuhilfenahme von heissen Nadeln, welche auf den genannten Platten angeordnet sind) miteinander verbunden werden, und erst ganz am Ende, wenn alle gewünschten Schichten aufeinander liegen und der RFID-Chip und die Antenne eingebettet ist, unter Anwendung von Wärme und Druck fusioniert werden. Die Zuführung von derartig vorbereiteten Bahnen aus Vliesstoff wird insbesondere deshalb bevorzugt, da der schwierige Schritt der (mehrfachen) Beschichtung so vollständig getrennt wird von der eigentlichen Herstellung der Mehrschichtstruktur mit integriertem RFID-Chip.

Dabei wird bevorzugtermassen so vorgegangen, dass eine erste Schicht frei von Aussparungen zugeführt wird, mit einer zweiten Schicht mit Aussparungen verbunden wird, dass in diese Aussparungen RFID-Chips eingelegt werden, die Antennen auf die Fläche der zweiten Schicht aufgelegt werden und gegebenenfalls in einem Verbindungsprozess, insbesondere bevorzugt in einem Lötprozess, der RFID-Chip mit der Antenne verbunden wird, dass eine dritte Schicht mit registrierten Aussparungen zur Aufnahme überstehender Bereiche des RFID-Chips verbunden wird und dass eine vierte Schicht frei von Aussparungen zugeführt und mit der dritten Schicht verbunden wird. Die Aussparung in der zweiten Schicht und die Aussparung in der dritten Schicht sind vorzugsweise an die Bauform des Chips angepasst und umschliessen den Chip möglichst dicht, das heisst bevorzugtermassen formbündig und unter Umständen sogar formschlüssig. Die Aussparung der dritten Schicht ist somit im Allgemeinen etwas kleiner als die Aussparung in der zweiten Schicht, da der Chip i.d.R. oben (mold component) schmaler ist als unten (lead frame). Wären beide Aussparungen gleich gross, oder wäre gar nur eine einzige Lage mit einer Aussparung vorhanden, in welche der Chip eingepasst wird, wie aus dem Stand der Technik bekannt, würde der Chip in einem an sich zu grossen Hohlraum sitzen, was sich negativ auf die Lebensdauer des Umschlagsmaterials und insbesondere der Verbindung von Antenne zu Chip auswirkt.

Um am Ende tatsächlich einen fertigen Bogen zur Verwendung bei einem Reisepass zur Verfügung zu stellen, wird anschliessend eine Papierschicht auf die vierte Schicht aufgebracht und mit dieser verbunden, wobei es bevorzugtermassen möglich ist, die vierte Schicht bereits als Verbund mit der Papierschicht aufzubringen (wobei dann für diese Verbindung bevorzugt ein Kleber mit Lösungsmittel verwendet wird), und zudem wird von unten ein Umschlagmaterial mit der Unterseite der vier fusionierten Schichten verbunden, wobei auf jeden Fall in einem abschliessenden Schritt (gegebenenfalls zusätzlich vor der Aufbringung des Umschlagmaterials) unter Anwendung von Druck die Schichtstruktur derart komprimiert wird, dass die Hohlräume in der fertigen Mehrschichtstruktur zu wenigstens 90% befüllt sind. Bei diesem Verbindungsschritt erweist es sich als wesentlich, dass die Schichten bei Beginn nur zu ca. 70-85% gefüllt sind, und zwischen den Schichten eingeschlossene Luftblasen durch die noch leicht poröse Oberflächen der einzelnen Schichten unter Druck nach Aussen entweichen können. Bevorzugtermassen werden die einzelnen Schichten deshalb auch so aufeinander gestapelt, dass nicht zwei mit Kleber versiegelte Oberflächen aufeinander zu liegen kommen.

Wie bereits oben erläutert, kann es von Vorteil sein, wenn eine erhöhte Flexibilität in einer bestimmten Richtung vorhanden ist. Insbesondere ist es bevorzugt, dass bei einem Reisepass die Biegeflexibilität in einer Richtung senkrecht zur Kante des Rückens höher ist als parallel zur Kante des Rückens. Dies kann über die Verwendung von anisotropem Vliesstoff eingestellt werden. So wird gemäss einer weiteren bevorzugten Ausführungsform wenigstens eine der Schichten, insbesondere bevorzugt die zweite und die dritte Schicht als anisotroper Vliesstoff ausgebildet, und dieser anisotrope Vliesstoff wird derart zugeführt, dass die bevorzugte Faserrichtung im wesentlichen parallel zur Richtung des Scharniers des Umschlages angeordnet ist. In einer weiteren bevorzugten Ausführungsform werden in Bereichen, in denen erhöhte Flexibilität gefordert wird, einzelne Vliesschichten ganz weggelassen.

Bevorzugtermassen ist das Verfahren weiterhin dadurch gekennzeichnet, dass die einzelnen Schichten oder bereits verbundene Schichten von Rolle zugeführt werden, in einem kontinuierlichen respektive getakteten Prozess verarbeitet werden, und dass insbesondere bevorzugt die resultierende Mehrschichtstruktur entweder zu einem Bogenformat zurecht geschnitten oder auf Rolle gesammelt wird. Die bisherigen Verfahren nach dem Stand der Technik erlaubten nur eine Herstellung von Bogen zu Bogen.

### KURZE ERLÄUTERUNG DER FIGUREN

Die Erfindung soll nachfolgend anhand von Ausführungsbeispielen im Zusammenhang mit den Zeichnungen näher erläutert werden. Es zeigen:
- Fig. 1: a) einen schematischen Schnitt durch eine Mehrschichtstruktur mit integriertem Chip und Antenne; b) eine alternative Darstellung einer solchen Mehrschichtstruktur; c) einen Schnitt durch eine derartige Mehrschichtstruktur in vergrösserter fotografischer Ansicht nach mehrfacher Knickbelastung;
- Fig.2: a)-c) einzelne Schritte eines möglichen Herstellungsverfahrens einer Mehrschichtstruktur; und
- Fig. 3: eine mögliche Anlage zur Herstellung einer derartigen Mehrschichtstruktur respektive von Bögen als Umschläge für Passdokumente; und
- Fig. 4: a) einen Ausschnitt des Aufbaus einer Mehrschichtstruktur mit integriertem Chip und Antenne (Antenne aus Gründen der Übersichtlichkeit weggelassen) vor der Verbindung der einzelnen Schichten;
b) einen Ausschnitt des Aufbaus einer Mehrschichtstruktur mit integriertem. Chip und Antenne (Antenne aus Gründen der Übersichtlichkeit weggelassen) nach der Verbindung (Lamination) der einzelnen Schichten.

### WEGE ZUR AUSFÜHRUNG DER ERFINDUNG

Eines der wesentlichen Elemente ist das als Basis für die einzelnen Schichten verwendete Material. Im Rahmen dieser Anmeldung wird von einem Vliesstoff gesprochen. Darunter ist im Zusammenhang dieser Anmeldung folgendes zu verstehen: Spricht man von einem Vlies, meint man allgemein einen Vliesstoff. Ein Vliesstoff ist ein textiles Flächengebilde aus einzelnen Fasern. Im Gegensatz dazu werden Gewebe, Gestricke und Gewirke aus Garnen hergestellt und Membranen aus Folien.

Ein Vliesstoff unterscheidet sich vom Papier u.a. in der Länge der Fasern, welche dort sehr viel kürzer sind (typische Werte für Fasern bei Papier: 0.2 - 2 mm Länge und bei Vliesstoff: 4 mm - endlos). Ein weiterer in der Regel wesentlicher Unterschied zwischen einem Vliesstoff und einem Papier ist das Fehlen von Wasserstoffbrückenbindungen bei den Fasern von Vliesstoffen, die die Festigkeit des Papieres ausmachen. Es sind auch unter anderem diese Wasserstoffbrücken, welche die im Rahmen der vorliegenden Erfindung entscheidenden Unterschiede zur Verwendung von Papier als Schichtmaterial ausmachen, sowie aber auch die Tatsache, dass im Gegensatz zu Papieren Vliesstoffe (und gleichermassen offenporige Schaumstoffe) keine Füllstoffe aufweisen, welche die Brüchigkeit erhöhen.

Ein Vlies besteht aus lose zusammenliegenden Fasern, welche noch nicht miteinander verbunden sind. Die Festigkeit eines Vlieses beruht nur auf der fasereigenen Haftung, kann aber durch Avivagen und/oder Binder beeinflusst werden. Damit man das Vlies verarbeiten und benutzen kann, muss es verfestigt werden, wofür verschiedene Methoden angewandt werden können. Erst ein verfestigtes Vlies ist als Vliesstoff zu bezeichnen. Die Verfestigung kann beispielsweise durch Verfilzen, beispielsweise mit Hilfe von Nadelwalzen erfolgen oder/und durch Behandlung mit geeigneten Bindemitteln.

Vliesstoffe sind wesentlich verschieden von Geweben, Gestricken und Gewirken, die sich durch vom Herstellverfahren bestimmte Legung der einzelnen Fasern oder Fäden auszeichnen. Vliesstoffe bestehen dagegen aus Fasern, deren Lage sich nur mit den Methoden der Statistik beschreiben lässt. Die Fasern liegen wirr im Vliesstoff zueinander. Die englische Bezeichnung nonwoven (nicht gewebt) grenzt sie eindeutig ab von Geweben, Gestricken etc.. Vliesstoffe werden unter anderem nach dem Polymer, dem Bindungsverfahren, der Faserart (Stapel- oder Endlosfasern), der Faserfeinheit und der Faserorientierung unterschieden. Die Fasern können dabei definiert in einer Vorzugsrichtung abgelegt werden (anisotropes Vlies) oder gänzlich stochastisch orientiert sein wie beim Wirrlagen-Vliesstoff.

Wenn die Fasern keine Vorzugsrichtung in ihrer Ausrichtung (Orientierung) haben, spricht man von einem isotropen Vliesstoff. Sind die Fasern in einer Richtung häufiger angeordnet als in der anderen Richtung, dann spricht man von Anisotropie.

Vliesstoffe unterscheiden sich u.a. durch:
- Faserarten und deren Ursprung, wobei im vorliegenden Fall chemische Fasern von Belang sind, diese können aus natürlichen Polymeren bestehen, bevorzugtermassen aber aus synthetischen Polymeren wie zum Beispiel Polyamid (PA 66 - Markenbezeichnung Nylon; PA 6 - Markenbezeichnung Perlon), Polyester (PET - Polyethylenterephthalat; PBT - Polybutylenterephthalat), PVC (Polyvinylchlorid), PP (Polypropylen), PE (Polyethylen), sowie Fasermischungen.
- Spinnverfahren zur Fasergewinnung, können trocken oder nass durchgeführt werden,
- Verfestigungsverfahren (Bonding), können mechanische Verfahren sein (durch Vernadelung oder durch Wasserstrahlverfestigung), chemische Verfahren (durch die Zugabe von Bindemitteln) oder thermische Verfahren (durch das Erweichen in einem geeigneten Gasstrom, zwischen beheizten Walzen oder auch in einem Dampfstrom).

Mögliche Produkte zur Verwendung im vorliegenden Zusammenhang sind beispielsweise unter dem Namen Viledon^{®} von der Firma Freudenberg Vliesstoffe KG, Weinheim, Deutschland erhältlich.

Ebenfalls wesentlich als Element ist der offenzellige Schaumstoff als Alternative oder Ergänzung zum oben genannten Vliesstoff. Darunter ist ein flexibler, d.h. leicht biegbarer Schaumstoff auf Kunststoffbasis zu verstehen, welcher wenigstens zu einer der Oberflächen offenporig ausgebildet ist, und entsprechend mit einem Polymer, einem Oligomer respektive generell dem Kleber gefüllt werden kann. Als Material für einen solchen Schaumstoff kommen die oben im Zusammenhang mit dem Vliesstoff genannten Polymere in Frage, es können aber auch andere Polymere zu einem derartigen offenzelligen Schaumstoff verarbeitet und im Rahmen der vorliegenden Erfindung verwendet werden.

Weiterhin wesentlich im vorliegenden Kontext ist der so genannte flexible thermoplastische Kleber. Darunter ist insbesondere bevorzugt ein Kunststoff zu verstehen, welcher im flüssigen oder in Wasser gelösten oder dispergierten Zustand (einschliesslich wässrige Emulsion) verarbeitet werden kann, und entsprechend beispielsweise in die Hohlräume des Vliesstoffes, gegebenenfalls in mehreren Schritten, unter Zuhilfenahme eines möglichst druckfreien Auftragsverfahrens (beispielsweise Walzenauftrag, Düsenauftrag, Sprühauftrag, Schleier/Vorhang, bevorzugt wird der im wesentlichen druckfreie Walzenauftrag, wobei zunächst mit einem Rakel eine definierte Schicht auf die Walze aufgetragen wird und anschliessend diese Schicht durch ein Abrollen der Walze auf der Bahn aus Vliesstoff auf diese übertragen wird) eingefüllt werden kann, ohne dass dabei der Vliesstoff zusammengepresst und dadurch die Hohlräume verloren gehen. Zudem handelt es sich beim Kleber um eine Substanz, welche bevorzugtermassen lösungsmittelfrei ist (bevorzugt ein Kleber mit Wasser als Lösungsmittel respektive Dispersionsmittel) und unter der Einwirkung von Wärme (auch elektromagnetische Strahlung oder Druck möglich) nur teilweise aushärtet. Unter Aushärtung ist in diesem Zusammenhang zu verstehen, dass das Wasser (oder ein anderes Vehikel) als Trägermedium entzogen wird und der thermoplastische Kleber als Feststoff zurückbleibt. Eine chemische Vernetzung ist nicht notwendigerweise Teil der Aushärtung. Dies bedeutet, dass der Kleber zwar die stoffschlüssigen Verbindungen zwischen einzelnen Schichten gewährleistet und als Füllstoff wirkt, auf der anderen Seite aber nicht vollständig aushärtet und somit beim Endprodukt eine genügende Flexibilität zulässt. Mögliche Produkte sind beispielsweise auf Basis von Polyacrylat und/oder Polyurethan z.B. als wässrige Lösung oder wässrige Dispersion verfügbar, sie werden typischerweise bei Raumtemperatur aufgetragen, können bei einer Temperatur im Bereich von 20 - 130 Grad Celsius nach dem Einfüllen in den Vliesstoff zum stoffschlüssigen Verbinden fusioniert werden, und können unter Anwendung einer Temperatur im Bereich von 50 - 150 Grad Celsius und einem Druck im Bereich von 5-10 Tonnen (bei einer Druckfläche von ca. A4) im wesentlichen vollständig abgebunden werden.

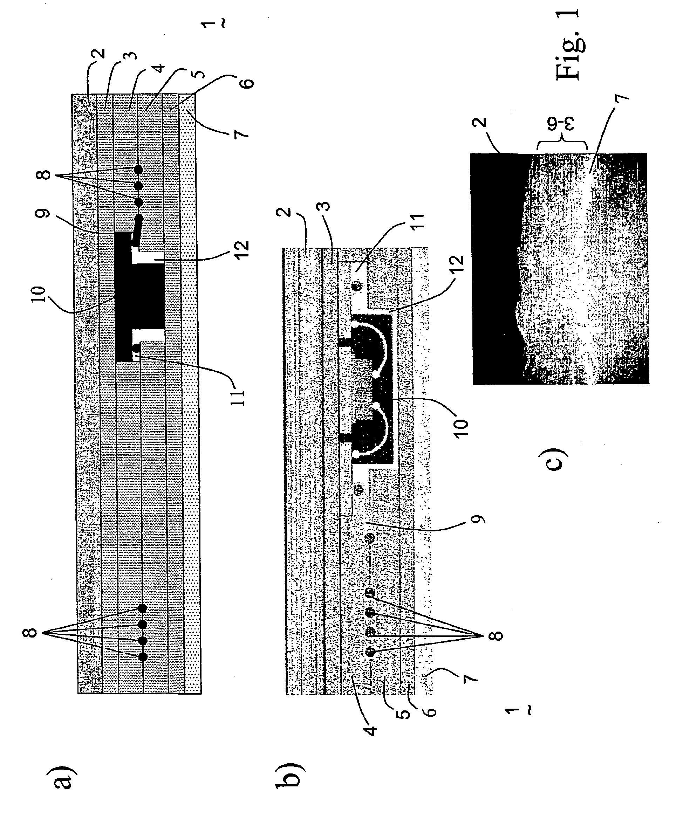

Figur 1 zeigt nun eine Mehrschichtstruktur 1, wie sie als Einband für einen Reisepass verwendet werden kann. Die beim Reisepass nach aussen gerichtete äusserste Schicht wird dabei durch eine Schicht aus Umschlagmaterial 2 gebildet. Dieses Umschlagmaterial oder Hüllenmaterial kann beispielsweise das in Fachkreisen bekannte Material Skivertex Secura sein, mit einer Dicke von 300-370 µm. Anschliessend folgt eine durchgängige Schicht aus Vliesstoff, welche als obere dünne Vliesschicht 3 bezeichnet wird. Diese Schicht (wie auch die anderen Schichten 4-6) ist mit Kleber zu wenigstens 90% gefüllt und weist eine ursprüngliche Dicke von 110 µm auf. Anschliessend folgt eine obere dicke Vliesschicht 4, mit einer ursprünglichen Dicke von 240 µm. Diese obere dicke Vliesschicht 4 verfügt über eine Aussparung 11, welche der Grösse eines ersten Bereiches des in der Mehrschichtstruktur integrierten RFID-Chip 10 im wesentlichen entspricht. Anschliessend folgt eine untere dicke Vliesschicht 5, welche die gleiche ursprüngliche Dicke aufweist wie die obere dicke Vliesschicht 4. Auch diese untere dicke Vliesschicht 5 verfügt über eine Aussparung 12, welche registriert zur genannten Aussparung 11 in der oberen Vliesschicht 4 angeordnet ist und welche das restliche Volumen des Chips 10 aufnimmt. Zwischen der oberen dicken Vliesschicht 4 und der unteren dicken Vliesschicht 5 sind die einzelnen Leiter der mehrfach gewickelten Antenne 8 angeordnet. Die Antenne 8 ist mit dem entsprechenden Anschlusskontakt des Chip über eine elektrische Verbindung verbunden. Diese elektrische Verbindung kann entweder über ein Thermokompressionsschweissen, oder eine Lötstelle gewährleistet werden, es kann sich dabei aber auch um einen Crimp-Kontakt handeln.

Unten folgt eine weitere untere dünne Vliesschicht 6, welche die gleiche ursprüngliche Dicke aufweist wie die obere dünne Vliesschicht 3. Die Innenseite des resultierenden Covers wird gebildet durch eine zusätzliche Papierschicht 7, welche normalerweise circa 60µm dick (35 g/m²) ausgestaltet ist, und bei welcher darauf geachtet wird, dass der Klebstoff höchstens über circa 20µm eindringt und die freiliegende Seiten entsprechend in ihrem Aufnahmeverhalten für Weissleim, Druckfarben oder ähnliches nicht wesentlich beeinflusst wird, das heisst, dass diese innere Papierschicht 7 direkt weiterverarbeitet werden kann, z.B. indem ein Vorsatzpapier aufgeklebt wird. Diese innere Papierschicht 7 wird nämlich hauptsächlich vorgesehen, da üblicherweise bei der Herstellung eines Reisepasses so vorgegangen wird, dass ein so genanntes Vorsatzpapier mit den eigentlichen Seiten des Passes zu einem Booklet zusammengenäht wird. Anschliessend wird dieses Vorsatzpapier mit einem Weissleim auf das Cover, d.h. die Mehrschichtstuktur, aufgeklebt. Da die chemische Natur der hier vorgeschlagenen Vliesschichten mit einem Kleben mit Weissleim im wesentlichen nicht genügend kompatibel ist, wird entsprechend die innere Papierschicht 7 als Anbindung für das Vorsatzpapier vorgesehen.

Eine weitere Verbesserung ist übrigens möglich, indem dem Drucker respektive dem Hersteller des Reisepasses eine Struktur zur Verfügung gestellt wird, welche nur die Schichten 2-6 (vergleiche Figur 1a) aufweist. Verwendet nun der Hersteller des Reisepasses ein Vorsatzpapier, welches bereits auf der Aussenseite mit einem Kleber im Sinne der vorliegenden Erfindung vorbeschichtet ist, kann anschliessend nach dem Erstellen des Booklets dieses in einem reinen Heisspress-Vorgang mit dem Cover verbunden werden. So wird vollständig auf die Verwendung von Weissleim verzichtet und es entsteht ein weiter verbesserter Verbund.

Während bei den Produkten nach dem Stand der Technik in der Regel also ein Vorsatzpapier bei der Herstellung des Passes erforderlich ist und beim Bedrucken und Binden des Passes separat zugeführt und mit eigens zugeführtem Weissleim verklebt werden muss, um die Innenseite des Einbandes zu stellen, ist dies in diesem Fall nicht nötig, da die Papierschicht 7 dann das Vorsatzpapier ist und mit dem perfekt angepassten Kleber bereits vorbereitet ist und diese Funktion direkt übernehmen kann.

Bevorzugtermassen handelt es sich bei der Papierschicht 7 generell um ein Sicherheitspapier, das heisst um ein Papier, wie es beispielsweise aus dem Bereich der Banknotenherstellung bekannt ist. Somit kann dieses Papier 7 Sicherheitsmerkmale aufweisen wie beispielsweise Melierfasern, Sicherheitsstreifen, gegebenenfalls im so genannten Windows-Verfahren eingebrachte Sicherheitsstreifen, fluoreszierende Sicherheitsmerkmale, welche gegebenenfalls polarisierend absorbieren oder emittieren, Planchetten, etc.

Figur 1 c) zeigt einen Schnitt durch ein derartiges Substrat, wobei die Probe bereits einer Vielzahl von Knickungen unterzogen worden ist. Aus Figur 1 c) wird ersichtlich, dass das Substrat dabei weder innere Brüche erlitten hat, noch zwischen den einzelnen Schichten delaminiert.

Da alle Verbindungen mit speziellem lösungsmittelfreiem Klebstoff auf wässriger Basis erfolgen und die Schichten mit dem gleichen Klebstoff beschichtet werden, entsteht beim Fusionieren des gesamten Paketes eine homogene Verbindung. Einzig die Verbindung zwischen der Papierschicht und der Schicht 6 wird vorzugsweise unter Verwendung eines lösungsmittelhaltigen Klebstoffes erzeugt.
- Beim Biegen delaminiert der e-Passport Cover nicht.
- Der e-Passport Cover ist modulartig aufgebaut und kann beliebig modifiziert und neuen Anforderungen angepasst werden.

Der Produktionsprozess kann im Gegensatz zu bisher rotativ von Rolle zu Rolle zu Bogen erfolgen, das bedeutet eine kontinuierliche Fertigung mit all ihren Vorteilen, d.h. Kostenvorteile in der Produktion und Qualität.

In jenem Bereich, wo der Rücken des Passes angeordnet sein wird, das heisst wo der Einband aus der Mehrschichtstruktur geknickt werden wird, ist es möglich und von Vorteil, gewisse der Schichten zu unterbrechen. Vorteilhafter Weise werden beispielsweise die Schichten 4 und/oder 5 im Knickbereich des Passes unterbrochen, was eine Erhöhung der möglichen Flachlage des geschlossenen Passes nach sich zieht.

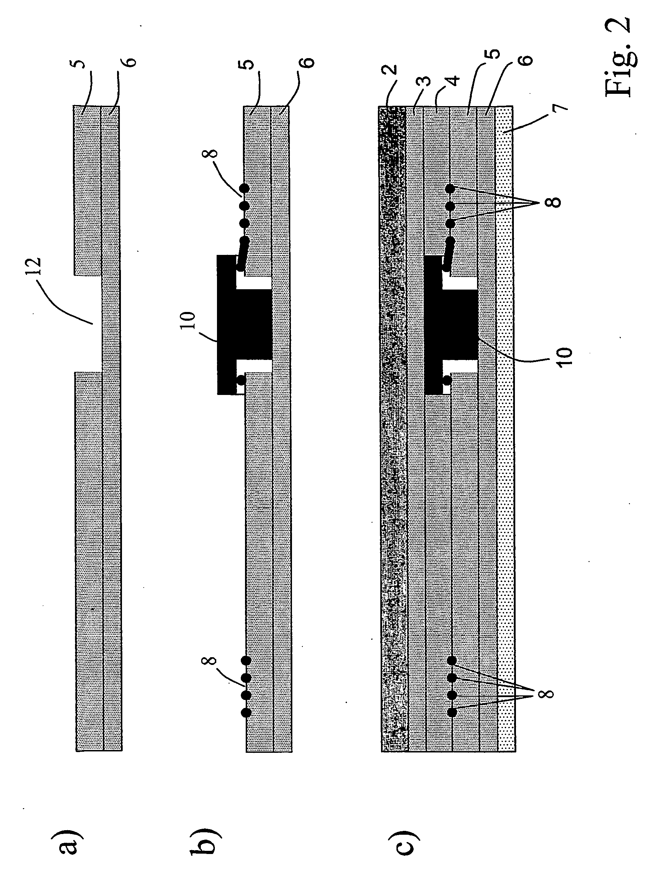

In Figur 2 wird schematisch ein mögliches Herstellungsverfahren für eine derartige Mehrschichtstruktur dargestellt. Zunächst wird die untere dünne Vliesschicht 6, welche vollflächig ist und keine Aussparungen aufweist, zugeführt. Die Vliesschicht 6 ist dabei nach unten versiegelt, das heisst sie kann nur von oben mit Kleber gefüllt werden. Diese Schicht wird nun in zwei nacheinander geschalteten Auftragungsschritten sukzessive mit flüssigem thermoplastischem Kleber zu 80% volumenmässig gefüllt.

Anschliessend wird die untere dicke Vliesschicht 5, welche ebenfalls an ihrer Unterseite versiegelt ist, zugeführt, wobei zunächst die auf die Grösse und Position des Chip angepassten Aussparungen 12 ausgestanzt oder ausgelasert werden, und anschliessend die beiden Schichten 5 und 6 in innigen Kontakt gebracht werden. Die beiden Schichten werden unter Anwendung von Wärme und Druck geheftet oder sogar vor-fusioniert, typischerweise bei einer Temperatur von ca. 100 Grad Celsius.

Anschliessend wird in einer Bestückungsstation zunächst der Chip 10 in die Aussparung 12 eingelegt, anschliessend die Leiter der Antenne 8 aufgelegt und die elektrische Verbindung 9 zwischen dem Chip 10 und der Antenne 8 wird hergestellt. Anschliessend wird auch die Schicht 5 von oben mit Kleber gefüllt (dieser Schritt kann generell jeweils auch ganz oder teilweise vor der Bestückung erfolgen).

Anschliessend wird die weitere Schicht 4 zugeführt, in Kontakt mit der Oberfläche der unteren dicken Vliesschicht 5 gebracht und mit dieser unter Anwendung von Wärme und/oder Druck stoffschlüssig geheftet oder verbunden. Die obere dicke Vliesschicht 4 wird vor dem Zuführten in einer Stanzstation unter Bildung der Aussparungen 11 gestanzt und die Bahn der Vliesschicht 4 wird so zugeführt, dass diese Aussparungen 11 registriert zur Position des Chip sind.

In einem letzten Schritt wird dann nach dem Befüllen der oberen dicken Vliesschicht 4 mit Kleber auf der einen Seite die durchgängige obere dünne Vliesschicht 3 aufgebracht und stoffschlüssig mit der Schicht 4 geheftet oder verbunden, und zu guter letzt zuoberst die Schicht aus Umschlagmaterial 2, nachdem die Vliesschicht 3 mit Kleber zu 80% gefüllt ist, aufgebracht und stoffschlüssig verbunden. Auf der anderen Seite wird die dünne Papierlage 7 auf die untere dünne Vliesschicht 6 aufgebracht.

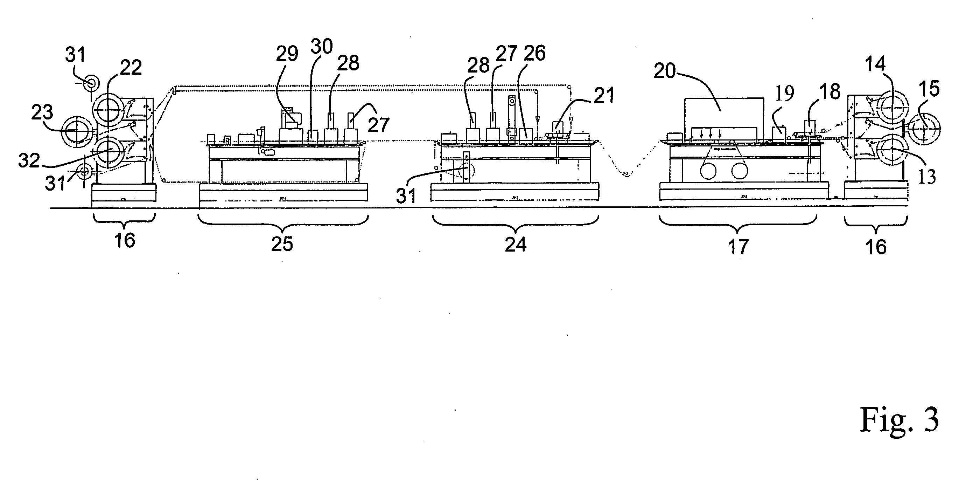

In Figur 3 ist eine mögliche Anordnung von einzelnen Bearbeitungsstationen zur
Durchführung eines Herstellungsverfahrens schematisch dargestellt. Das Verfahren wird dabei in einer anderen Reihenfolge durchgeführt, als dies in Figur 2 dargestellt ist. Zudem wird hier bereits vorgefertigtes Bahnmaterial (Halbzeug) aus Vliesstoff verwendet, das heisst es wird Vliesstoff verwendet, welcher bereits mit Kleber zu 70-85% gefüllt ist und getrocknet ist und auf einem versiegelten Papier vorgelegt wird. Hier wird ab einer Rolle 13 zunächst die obere dünne Vliesschicht 3 vorgelegt und mit der oberen dicken Vliesschicht 4, welche ab Rolle 14 zugeführt wird, verbunden. Dazu wird zunächst die Vliesschicht 4 in der Station 18 gestanzt (Aussparung 11) und das versiegelte Papier auf die Rolle 15 abgeführt. Unter Einwirkung von Wärme wird in der Fixierung 19 eine Heft-Verbindung zwischen den Lagen 3 und 4 hergestellt. Dabei werden die beiden Bahnen 3 und 4 aus Vliesstoff zwischen zwei Platten, auf welchen Nadeln angeordnet sind, in getakteter Weise geheftet. Zwischen den Platten liegt dabei im wesentlichen kein flächiger Druck an, sondern die Verbindung geschieht im wesentlichen nur durch die Einwirkung der auf einer Temperatur von circa 200°C gehaltenen Nadeln, welche in den Vliesstoff eindringen und die beiden Bahnen gewissermassen heften. In der Bestückungsstation 20 wird dann der Chip gesetzt, der Draht der Antenne gelegt und die Verbindungen werden gelötet. In einer nächsten Station 24 wird dann die untere dicke Vliesschicht 5, nachdem sie ebenfalls in der Einheit 21 gestanzt wurde und das Trägerpapier abgeführt wurde, mit diesem Schichtverbund in der Fixierung 26 geheftet, analog zur bereits beschriebenen Fixierung 19. Anschliessend folgt die Verbindung mit der unteren dünnen Vliesschicht 6, wobei diese direkt in einem vorgefertigten Verbund mit der Papierschicht 7 von einer Rolle 23 zugeführt wird. Der resultierende Schichtverbund wird anschliessend in der Einheit 27 fusioniert, kalibriert und in der Einheit 28 gekühlt. Das Fusionieren geschieht dabei bei einer Temperatur von 130-140°C bei einem Druck (bei einer Fläche von circa A4) von 8 bis 9 t und jeweils während einer Zeit von vier bis 5 Sekunden. Anschliessend wird das Trägerpapier, welches als Träger zusammen mit der oberen dünnen Vliesschicht 3 geführt worden war, nach unten über die Rolle 31 abgeführt. Im letzten Verbindungsschritt wird von unten die Schicht aus Umschlagmaterial 2 zugeführt ab Rolle 32, in der Einheit 27 fusioniert (im wesentlichen gleiche Bedingungen wie in der Einheit 27) und in der Einheit 28 gekühlt. In diesen letzten beiden Einheiten 27 und 28 werden Bedingungen eingestellt, welche dazu führen, dass im Endprodukt höchstens noch 10% Luft eingeschlossen sind, normalerweise höchstens 5%. Mit anderen Worten wird hier auf die endgültige Dicke gepresst respektive fusioniert. Zudem wird hier eine Temperatur angelegt, dass der Kleber über ein Anlegen zusätzlicher Wärme im wesentlichen nicht weiter aktiviert werden kann. Der Kleber wird also im wesentlichen abschliessend ausgehärtet, da der Kleber aber so ausgelegt ist, dass er auch danach noch flexibel ist, führt dies nicht zu einem starren Verbund.

Anschliessend folgt eine elektronische Prüfung in der Einheit 30 (Antennen- und RFID-Prüfung) und zu guter letzt wird in der Einheit 29 auf das Format (typischerweise ein Bogen mit Rücken respektive Cover für zwei Pässe) zugeschnitten.

Der vorgefertigte Verbund der dünnen Vliesschicht 6 mit der Papierschicht 7 wird übrigens vorgängig hergestellt, indem die Papierschicht 7 mit einem lösungsmittelhaltigen thermoplastischen Kleber in einem Walzenauftrag beschichtet wird, diese Schicht getrocknet wird, anschliessend in einem warmen Kalander erwärmt wird und dann mit der Bahn aus Vliesstoff kontaktiert wird. Anschliessend wird von der anderen Seite der Vliesstoff in einem weiteren Schritt zu wenigstens 80% mit Kleber gefüllt und getrocknet. Dabei wird darauf geachtet, dass die dem Vlies abgewandte Oberseite der Papierschicht 7 ihre offenporige Struktur nicht verliert.

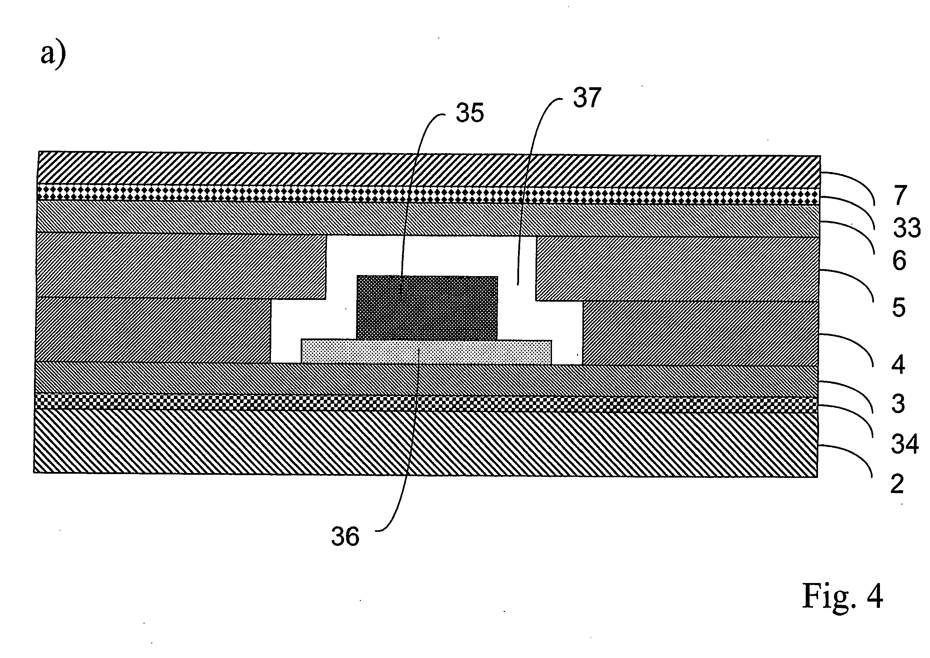

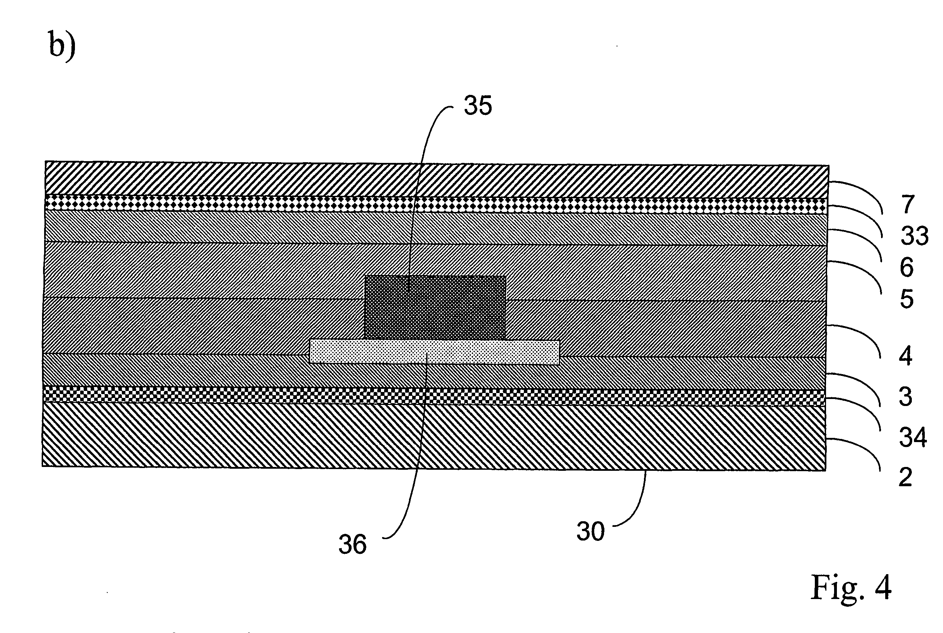

In Figur 4 a) ist in einem Ausschnitt der Aufbau der Mehrschichtstruktur mit integriertem Chip und Antenne (Antenne aus Gründen der Übersichtlichkeit weggelassen) vor der Verbindung der einzelnen Schichten dargestellt. In diesem Fall besteht der Chip 10 aus einem so genannten Lead Frame 36 und einem Mold Compound 35. Die Ausschnitte in den Schichten 4 und 5 tragen der unterschiedlichen Querschnittsfläche dieser beiden Elemente durch entsprechend angepasste Stanzungen unterschiedlicher Grösse Rechnung.

In Figur 4 a) ist zudem ein (in dieser Figur zur besseren Erkennbarkeit überdimensional ausgestalteter) Zwischenraum 37 (Lücke) zwischen dem Chip und den diesen umgebenden Schichten 4-6 dargestellt. Dieser Zwischenraum 37 wird im Herstellungsprozess so klein wie möglich eingestellt. Mit anderen Worten wird eine möglichst grosse Formbündigkeit zwischen dem Chip und den diesen umgebenden Schichten eingestellt.

Die Lücke 37 verschwindet vollständig beim Fusionieren, das heisst wenn die in Figur 4 a) dargestellten Schichten 3-6, welche dann noch eine Befüllung mit Kleber im Bereich von 70-85% aufweisen und entsprechend einen erheblichen Anteil an eingeschlossener Luft aufweisen, unter Anwendung von Wärme und/oder Druck verpresst werden, was dazu führt, dass nach der Fusionierung in den Schichten 3-6 ein Kleberanteil im Bereich von wenigstens 90%, bevorzugt wenigstens 95% vorliegt. Das Resultat dieser Fusionierung ist in Figur 4 b) dargestellt, der Chip ist nun vollständig und ohne jegliche Lücke unter direkter Angrenzung der Vliesmaterialien der Schichten 3-6 umschlossen.

Bei der Fusionierung kann der Chip wenigstens teilweise in gewisse Schichten einsinken, wie dies in Figur 4 b) bei der Schicht 3 erkennbar ist. Der Chip ist auf jeden Fall so optimal eingebettet.

Die hier dargestellten Ausführungsbeispiele dienen der Illustration der Erfindung und zur Dokumentation, dass die erfindungsgemässen Strukturen hergestellt werden können. Sie sollen nicht dazu hinzugezogen werden, den Schutzbereich, wie er in den angehängten Ansprüchen definiert ist, einschränkend auszulegen.

### BEZUGSZEICHENLISTE

- 1: flexible Mehrschichtstruktur, Passdeckel
- 2: Umschlagmaterial
- 3: obere dünne Vliesschicht
- 4: obere dicke Vliesschicht
- 5: untere dicke Vliesschicht
- 6: untere dünne Vliesschicht
- 7: Papierschicht
- 8: Antenne
- 9: elektrische Verbindung zwischen Antenne und RFID-Chip
- 10: RFID-Chip
- 11: Aussparung in 4
- 12: Aussparung in 5
- 13: Abrollung von 3
- 14: Abrollung von 4
- 15: Aufrollung von Trägerpapier von 4
- 16: Ab- und Aufrollstation
- 17: Station zum Verbinden von 3 und 4 und Chip einsetzen
- 18: Stanzstation
- 19: Fixierung
- 20: Chip setzen, Draht legen, Verbindungen löten
- 21: Stanzstation
- 22: Abrollung von 5
- 23: Abrollung von Verbund 6 und 7
- 24: Station zum Schlussaufbau der Mehrschichtstruktur
- 25: Station zum Fertigstellen der Mehrschichtstruktur und Endkontrolle
- 26: Fixierung
- 27: Fusionieren
- 28: Kühlen
- 29: Formatstanzen
- 30: elektronische Prüfung
- 31: Aufrollung Trägerpapier
- 32: Abrollung von 2
- 33: Klebstoff auf Papierschicht
- 34: Klebstoff auf Umschlagmaterial
- 35: Mold
- 36: Lead Frame
- 37: Lücke

## Patentansprüche

1. Flexible Mehrschichtstruktur (1) mit RFID-Chip (10) und Antenne (8), wobei RFID-Chip (10) und Antenne (8) derart in die Mehrschichtstruktur (1) integriert sind, dass sie nicht auftragen, wobei wenigstens eine der Schichten (3-6) aus einem Vliesstoff besteht, dessen Hohlräume mit einem flexiblen thermoplastischen Kleber im wesentlichen befüllt sind
**dadurch gekennzeichnet, dass**
wenigstens vier Schichten aus einem Vliesstoff vorhanden sind, deren Hohlräume mit einem flexiblen Kleber im wesentlichen befüllt sind, wobei eine obere erste Vliesschicht (3) angeordnet ist, welche frei von Aussparungen ist, eine obere zweite Vliesschicht (4) angeordnet ist, welche eine Aussparung (11) aufweist, in welcher ein erster Teilbereich des RFID-Chips (10) angeordnet ist, eine untere erste Vliesschicht (5) angeordnet ist, welche eine Aussparung (12) aufweist, in welcher der restliche Teilbereich des RFID-Chips (10) angeordnet ist, sowie eine untere zweite Vliesschicht (6) aufweist, welche frei von Aussparungen ist, wobei die Vliesschichten (3-6) sämtlich mit dem gleichen flexiblen Kleber befüllt und über diesen stoffschlüssig miteinander verbunden sind.

2. Mehrschichtstruktur (1) nach Anspruch 1, **dadurch gekennzeichnet, dass** die Hohlräume zu wenigstens 90% befüllt sind, bevorzugt zu wenigstens 95% befüllt sind.

3. Mehrschichtstruktur (1) nach einem der vorhergehenden Ansprüche, **dadurch gekennzeichnet, dass** die Fasern des Vliesstoffes aus einem Kunststoff gebildet werden, bevorzugt aus einem Polymer, insbesondere bevorzugt auf Basis von Polyester und/oder Polyacrylat.

4. Mehrschichtstruktur (1) nach einem der vorhergehenden Ansprüche, **dadurch gekennzeichnet, dass** die Fasern des Vliesstoffes eine Länge von mehr als 4 mm, bevorzugt von mehr als 10 mm aufweisen, wobei es sich insbesondere bevorzugt um ein so genanntes Spinnylies handelt.

5. Mehrschichtstruktur (1) nach einem der vorhergehenden Ansprüche, **dadurch gekennzeichnet, dass** wenigstens eine der Schichten (3-6) aus einem anisotropen Vliesstoff besteht.

6. Mehrschichtstruktur (1) nach einem der vorhergehenden Ansprüche, **dadurch gekennzeichnet, dass** oberhalb der oberen ersten Vliesschicht (3) ein Umschlagmaterial (2) angeordnet ist, welches mit der oberen ersten Vliesschicht (3) stoffschlüssig verbunden ist, wobei es sich beim Umschlagmaterial (2) bevorzugt um ein Kunststoffmaterial handelt, welches an der oberen Oberfläche versiegelt ist und/oder eine Lederimitation darstellt und wobei das Umschlagmaterial (2) insbesondere bevorzugt eine Dicke im Bereich von 200-450 Mikrometer aufweist.

7. Mehrschichtstruktur (1) nach einem der vorhergehenden Ansprüche, **dadurch gekennzeichnet, dass** unterhalb der unteren zweiten Vliesschicht (6) eine Papierschicht (7) angeordnet ist, welche mit der unteren zweiten Vliesschicht (6) stoffschlüssig verbunden ist, und welche bevorzugt eine nach unten offenporige Struktur aufweist, wobei diese Papierschicht bevorzugtermassen wenigstens ein Sicherheitsmerkmal aufweist und/oder eingefärbt respektive bedruckt ist.

8. Mehrschichtstruktur (1) nach einem der vorhergehenden Ansprüche, **dadurch gekennzeichnet, dass** es sich beim Kleber um einen aktivierbaren Kleber handelt, welcher nicht vollständig aushärtet, wobei es sich bevorzugt um einen lösungsmittelfreien aktivierbaren, Kleber insbesondere bevorzugt um einen wärmeaktivierbaren lösungsmittelfreien Kleber handelt, und insbesondere bevorzugt um einen Polyurethan- und/oder Polyacrylat-Kleber auf wässriger Basis.

9. Mehrschichtstruktur (1) nach einem der vorhergehenden Ansprüche, **dadurch gekennzeichnet, dass** der Vliesstoff aus Fasern ausgewählt aus der Gruppe folgender Kunststoffe besteht: PE, PP, PET, PA, PBT, PVC oder Mischungen solcher Fasern, insbesondere bevorzugt aus Fasern auf Basis von Polyester und/oder Polyacrylat.

10. Mehrschichtstruktur (1) nach einem der vorhergehenden Ansprüche, **dadurch gekennzeichnet, dass** zwischen der oberen ersten (3) und oberen zweiten (4) Vliesschicht und/oder zwischen der oberen ersten Vliesschicht (3) und dem Umschlagmaterial (2) zusätzlich eine Sperrschicht für elektromagnetische Strahlung gelegt oder eine dieser Schichten als derartige Sperrschicht ausgestaltet ist, wobei insbesondere bevorzugt zu diesem Zweck ein Material ausgewählt aus der folgenden Liste verwendet wird: Metallfolie, Metallgewebe, Metallvlies, mit einer leitfähigen Struktur bedrucktes/bedampftes Papier, Vlies oder Gewirk/Gewebe, Vlies oder Gewirk/Gewebe mit Anteil an metallischen Fäden/Fasern.

11. Mehrschichtstruktur (1) nach einem der vorhergehenden Ansprüche, **dadurch gekennzeichnet, dass** wenigstens eine der Schichten (3-7) oder deren Bestandteile eingefärbt und/oder bedruckt ist, oder der thermoplastische Kleber in wenigstens einer der Schichten (3-7) eingefärbt ist, wobei bevorzugtermassen unterschiedliche Schichten respektive in unterschiedlichen Schichten befindlicher Kleber mit verschiedenen Farben eingefärbt ist.

12. Verwendung einer Mehrschichtstruktur (1) nach einem der vorhergehenden Ansprüche zur Herstellung eines Umschlags und/oder einer eingebundenen Einlageseite für ein Buch, oder einen Reisepass.

13. Reisepass mit einem Umschlag, einer Visumetikette oder einer Einlageseite aus einer Mehrschichtstruktur (1) nach einem der vorhergehenden Ansprüche 1-11 oder Karte aus einer Mehrschichtstruktur (1) nach einem der vorhergehenden Ansprüche 1-11.

14. Verfahren zur Herstellung einer Mehrschichtstruktur (1) nach einem der Ansprüche 1-11, **dadurch gekennzeichnet, dass** wenigstens vier Schichten aus einem Vliesstoff eingesetzt werden, deren Hohlräume mit einem flexiblen Kleber im wesentlichen befüllt werden, wobei eine obere erste Vliesschicht (3) angeordnet wird, welche frei von Aussparungen ist, eine obere zweite Vliesschicht (4) angeordnet wird, welche eine Aussparung (11) aufweist, in welcher ein erster Teilbereich des RFID-Chips (10) angeordnet ist, eine untere erste Vliesschicht (5) angeordnet wird, welche eine Aussparung (12) aufweist, in welcher der restliche Teilbereich des RFID-Chips (10) angeordnet ist, sowie eine untere zweite Vliesschicht (6) angeordnet wird, welche frei von Aussparungen ist, wobei die Vliesschichten (3-6) sämtlich mit dem gleichen flexiblen Kleber befüllt und über diesen stoffschlüssig miteinander verbunden werden, wobei wenigstens eine der Schichten (3-6) aus einem Vliesstoff in entspanntem, ungepresstem Zustand zugeführt wird, dessen Hohlräume mit dem Kleber im flüssigen Zustand zu 70-85 % des Volumens gefüllt werden, und bei der Verbindung mit weiteren Schichten (2-7) und/oder in einem abschliessenden Fusionsprozess der gefüllte Vliesstoff derart gepresst und optional mit Wärme behandelt wird, dass die Hohlräume in der fertigen Mehrschichtstruktur zu wenigstens 90% befüllt sind.

15. Verfahren nach Anspruch 14, **dadurch gekennzeichnet, dass** die wenigstens eine Schicht (3-6) aus einem Vliesstoff auf ihrer einen Oberfläche wenigstens teilweise versiegelt ist und auf ihrer gegenüberliegenden Oberfläche offenporig ausgebildet ist, und dass die wenigstens eine Schicht (3-6) mit der offenporigen Oberfläche nach oben zugeführt wird und durch diese mit Kleber befüllt wird und wobei vorzugsweise die wenigstens eine Schicht (3-6) aus einem Vliesstoff in wenigstens zwei Schritten, bevorzugt bei einer ursprünglichen Dicke von mehr als 150 µm in wenigstens drei Schritten mit Kleber befüllt wird.

16. Verfahren nach einem der Ansprüche 14-15, **dadurch gekennzeichnet, dass** zunächst eine Bahn aus Papier, bevorzugt eine Bahn aus silikonisiertem Papier, zugeführt und mit einer Schicht aus Kleber beschichtet wird, bevorzugt über einen Rollenauftrag, dass diese Kleberschicht getrocknet wird, dieses mit der Kleberschicht beschichtete Papier aufgewärmt und mit einer unbearbeiteten Bahn aus Vliesstoff bevorzugt unter Anwendung von Druck und/oder Temperatur in Kontakt gebracht wird, wobei der Vliesstoff von der dem Papier abgewandten Seite in einem oder mehreren Schritten sukzessive mit Kleber auf 70 - 85% befüllt wird, und wobei nach jedem dieser Schritte die Bahn aus Vliesstoff getrocknet wird.

17. Verfahren nach einem der Ansprüche 14-16, **dadurch gekennzeichnet, dass** insgesamt wenigstens vier Schichten (3-6) aus einem Vliesstoff zugeführt werden, wobei die einzelnen Schichten nacheinander miteinander verbunden werden, indem zunächst eine erste unten liegende und nach unten versiegelte Schicht (6) zugeführt und mit Kleber zu 70-85% befüllt wird, indem anschliessend eine zweite nach unten versiegelte Schicht (5) zugeführt und mit ihrer Unterseite mit der Oberseite der ersten Schicht (6) in Kontakt gebracht wird, und indem anschliessend unter Anwendung von Wärme und/oder Druck eine wenigstens bereichsweise und/oder punktweise stoffschlüssige Verbindung zwischen der ersten und der zweiten Schicht erzeugt wird, und so fort, wobei bevorzugt in einem abschliessenden Schritt unter Anwendung von Druck, insbesondere bevorzugt zwischen zwei Rollen, die Schichtstruktur derart komprimiert wird, dass die Hohlräume in der fertigen Mehrschichtstruktur zu wenigstens 90% befüllt sind, und dass nach Anspruch 14 vorgefertigte Bahnen von Vliesstoff zugeführt und bevorzugt erst kurz vor der Zusammenführung mit weiteren Bahnen aus Vliesstoff von dem Papier getrennt werden, dass diese Bahnen zunächst nur punktweise, bevorzugt unter Zuhilfenahme von heissen Nadeln, miteinander verbunden werden, und dass erst wenn die Vliesstoff-Schichten aufeinander liegen und der RFID-Chip und die Antenne eingebettet sind, die Mehrschichtstruktur unter Anwendung von Wärme und Druck fusioniert wird, wobei die erste Schicht (3) frei von Aussparungen zugeführt wird, mit der zweiten Schicht (4) mit Aussparungen (11) verbunden wird, dass in diese Aussparungen (11) RFID-Chips (10) eingelegt werden, die Antennen (8) auf die Fläche der zweiten Schicht (4) aufgelegt werden und in einem Verbindungsprozess, insbesondere bevorzugt in einem Thermokompressionsschweissen oder einem Lötprozess, der RFID-Chip (10) mit der Antenne (8) verbunden wird, dass die dritte Schicht (5) mit registrierten Aussparungen (12) zur Aufnahme überstehender Bereiche des RFID-Chips (10) verbunden wird und dass die vierte Schicht (6) frei von Aussparungen zugeführt und mit der dritten Schicht (5) verbunden wird, wobei anschliessend eine Papierschicht (7) auf die vierte Schicht (6) aufgebracht und mit dieser verbunden wird, wobei es bevorzugtermassen möglich ist, die vierte Schicht (6) bereits als Verbund mit der Papierschicht (7) aufzubringen, und dass von unten ein Umschlagmaterial (2) mit der Unterseite der ersten Schicht (3) verbunden wird, und dass in einem abschliessenden Schritt unter Anwendung von Druck die Schichtstruktur derart komprimiert wird, dass die Hohlräume in der fertigen Mehrschichtstruktur zu wenigstens 90% befüllt sind.

18. Verfahren nach einem der Ansprüche 14-17, **dadurch gekennzeichnet, dass** die obere erste Vliesschicht (3) und/oder die untere zweite Vliesschicht (6) mit einer eine ursprünglichen Dicke im Bereich von 60 - 150 Mikrometer, insbesondere bevorzugt im Bereich von 90-125 µm zugeführt wird, bevorzugtermassen bei einem ursprünglichen ungefüllten Flächengewicht im Bereich von 8 - 40 g/m², insbesondere bevorzugt bei einem ursprünglichen unbefüllten Flächengewicht im Bereich von 15 - 25 g/m², respektive bevorzugtermassen bei einem ursprünglichen zu 70-85% mit Kleber befüllten Flächengewicht im Bereich von 50 - 90 g/m².

19. Verfahren nach einem der Ansprüche 14-17, **dadurch gekennzeichnet, dass** die obere zweite Vliesschicht (4) und/oder die untere erste Vliesschicht (5) mit einer ursprüngliche Dicke im Bereich von 150 - 350 Mikrometer, insbesondere bevorzugt einer ursprünglichen Dicke im Bereich von 200-300 µm zugeführt wird, bevorzugtermassen bei einem ursprünglichen unbefüllten Flächengewicht im Bereich von 20 - 60 g/m², insbesondere bevorzugt bei einem ursprünglichen ungefüllten Flächengewicht im Bereich von 30 - 50 g/m², respektive bevorzugtermassen bei einem ursprünglichen zu 70-85% mit Kleber befüllten Flächengewicht im Bereich von 80 - 150 g/m².

20. Verwendung eines Verfahren nach einem der Ansprüche 16-19 zur Herstellung eines Umschlags oder einer Einlageseite für einen Reisepass, **dadurch gekennzeichnet, dass** wenigstens eine der Schichten (3-6), insbesondere bevorzugt die zweite (4) und die dritte (5) Schicht, als anisotroper Vliesstoff ausgebildet ist, und dass dieser anisotrope Vliesstoff derart zugeführt wird, dass die bevorzugte Faserrichtung im wesentlichen parallel zur Richtung des Scharniers des Umschlages des Reisepasses angeordnet ist, wobei vorzugsweise die einzelnen Schichten (2-7) oder bereits verbundene Schichten von Rolle (13, 14, 22, 23, 32) zugeführt werden, und in einem kontinuierlichen oder getaktet kontinuierlichen Prozess verarbeitet werden, und insbesondere bevorzugt die resultierende Mehrschichtstruktur entweder zu einem Bogenformat zurecht geschnitten oder auf Rolle gesammelt wird.

## Claims

1. A flexible multilayer structure (1) comprising an RFID chip (10) and an antenna (8) wherein the RFID chip (10) and the antenna (8) are integrated into the multilayer structure (1) in such a way that they do not protrude, wherein at least one of the layers (3-6) is composed of a nonwoven material, the cavities of which are substantially filled with a flexible thermoplastic adhesive,
**characterized in that**
at least four layers composed of a nonwoven material are present, the cavities of which are substantially filled with a flexible adhesive, wherein an upper first nonwoven layer (3) is arranged, which is free of cutouts, an upper second nonwoven layer (4) is arranged, which has a cutout (11) with a first partial region of the RFID chip (10) arranged therein, a lower first nonwoven layer (5) is arranged, which has a cutout (12) with the remaining partial region of the RFID chip (10) arranged therein, and also has a lower second nonwoven layer (6), which is free of cutouts, wherein the nonwoven layers (3-6) are all filled with the same flexible adhesive and are cohesively joined to one another by means of said adhesive.

2. The multilayer structure (1) as claimed in claim 1, **characterized in that** the cavities are filled to the extent of at least 90%, preferably filled to the extent of at least 95%.

3. The multilayer structure (1) as claimed in any of the preceding claims, **characterized in that** the fibers of the nonwoven material are formed from a plastic, preferably from a polymer, in particular preferably on the basis of polyester and/or polyacrylate.

4. The multilayer structure (1) as claimed in any of the preceding claims, **characterized in that** the fibers of the nonwoven material have a length of more than 4 mm, preferably of more than 10 mm, wherein in particular preferably a so-called spunbonded nonwoven is involved.

5. The multilayer structure (1) as claimed in any of the preceding claims, **characterized in that** at least one of the layers (3-6) is composed of an anisotropic nonwoven material.

6. The multilayer structure (1) as claimed in any of the preceding claims, **characterized in that** a cover material (2) is arranged above the upper first nonwoven layer (3), said cover material being cohesively joined to the upper first nonwoven layer (3), wherein the cover material (2) is preferably a plastic material which is sealed at the upper surface and/or represents a leather imitation and wherein the cover material (2) has in particular preferably a thickness within the range of 200-450 micrometers.

7. The multilayer structure (1) as claimed in any of the preceding claims, **characterized in that** there is arranged below the lower second nonwoven layer (6) a paper layer (7) which is cohesively joined to the lower second nonwoven layer (6), and which preferably has a downwardly open-pored structure, wherein the said paper layer preferably has at least one security feature and/or is inked or respectively printed.

8. The multilayer structure (1) as claimed in any of the preceding claims, **characterized in that** the adhesive is an activatable adhesive, which does not fully cure, preferably a solvent-free activatable adhesive, in particular preferably a heat-activatable solvent-free adhesive, and in particular preferably a polyurethane and/or polyacrylate adhesive on an aqueous basis.

9. The multilayer structure (1) as claimed in any of the preceding claims, **characterized in that** the nonwoven material is composed of fibers selected from the group of the following plastics: PE, PP, PET, PA, PBT, PVC or mixtures of such fibers, in particular preferably of fibers on the basis of polyester and/or polyacrylate.

10. The multilayer structure (1) as claimed in any of the preceding claims, **characterized in that** between the upper first (3) and upper second (4) nonwoven layer and/or between the upper first nonwoven layer (3) and the cover material (2), in addition a barrier layer for electromagnetic radiation is located or one of said layers is configured as a barrier layer of this type, wherein in particular preferably a material selected from the following list is used for this purpose: metal foil, metal woven fabric, metal nonwoven, paper, nonwoven or knitted/woven fabric having a conductive structure applied by printing/vapor deposition, nonwoven or knitted/woven fabric having a proportion of metallic threads/fibers.

11. The multilayer structure (1) as claimed in any of the preceding claims, **characterized in that** at least one of the layers (3-7) or the constituents thereof is colored and/or printed or the thermoplastic adhesive in at least one of the layers (3-7) is colored, wherein preferably different layers and/or respectively adhesive situated in different layers are/is colored with different colors.

12. The use of a multilayer structure (1) as claimed in any of the preceding claims for producing a cover and/or a bound inlay page for a book or a passport.

13. A passport comprising a cover, a visa label or an inlay page composed of a multilayer structure (1) as claimed in any of the preceding claims 1-11 or a card composed of a multilayer structure (1) as claimed in any of the preceding claims 1-11.

14. A method for producing a multilayer structure (1) as claimed in any of the preceding claims 1-11, **characterized in that** at least four layers composed of a nonwoven material are present, the cavities of which are substantially filled with a flexible adhesive, wherein an upper first nonwoven layer (3) is arranged, which is free of cutouts, an upper second nonwoven layer (4) is arranged, which has a cutout (11) with a first partial region of the RFID chip (10) arranged therein, a lower first nonwoven layer (5) is arranged, which has a cutout (12) with the remaining partial region of the RFID chip (10) arranged therein, and also has a lower second nonwoven layer (6), which is free of cutouts, wherein the nonwoven layers (3-6) are all filled with the same flexible adhesive and are cohesively joined to one another by means of said adhesive, wherein at least one of the layers (3-6) composed of a nonwoven material is supplied in a relaxed, unpressed state, the cavities thereof being filled with the adhesive in the liquid state to the extent of 70-85% of the volume, and during the bonding with further layers (2-7) and/or in a final fusion process, the filled nonwoven material is pressed and, optionally heat treated in such a way that the cavities in the finished multilayer structure are filled to the extent of at least 90%.

15. The method as claimed in claim 14, **characterized in that** the at least one layer (3-6) composed of a nonwoven material is at least partly sealed on one of its surfaces and is embodied in open-pored fashion on its opposite surface, and **in that** the at least one layer (3-6) is supplied with the open-pored surface facing upward and is filled with adhesive through said surface, wherein preferably the at least one layer (3-6) composed of a nonwoven material is filled with adhesive in at least two steps, preferably in at least three steps in the case of an original thickness of more than 150 µm.

16. The method as claimed in any of claims 14-15, **characterized in that** firstly a web of paper, preferably a web of siliconized paper, is supplied and is coated with a layer of adhesive, preferably by means of roll application, **in that** this layer of adhesive is dried, this paper coated with the layer of adhesive is heated and is brought into contact with an unprocessed web of nonwoven material, preferably with application of pressure and/or temperature, wherein the nonwoven material is filled progressively with adhesive to 70-85% from the side remote from the paper in one or a plurality of steps, and wherein the web of nonwoven material is dried after each of said steps.

17. The method as claimed in any of claims 14-16, **characterized in that** a total of at least four layers (3-6) composed of a nonwoven material are supplied, wherein the individual layers are successively joined to one another by a procedure in which firstly a first layer (6) situated at the bottom and sealed toward the bottom is supplied and is filled with adhesive to the extent of 70-85%, in which subsequently a second layer (5) that is sealed toward the bottom is supplied and is brought into contact by its underside with the top side of the first layer (6) and in which subsequently the first and second layers are bonded cohesively at least in regions and/or in points with application of heat and/or pressure and so on, wherein preferably, in a final step, with application of pressure, in particular preferably between two rolls, the layer structure is compressed in such a way that the cavities in the finished modular structure are filled to the extent of at least 90%, and **in that** webs of nonwoven material prefabricated as claimed in claim 14 are supplied and are separated from the paper, preferably only shortly before being brought together with further webs of nonwoven material, **in that** these webs are firstly bonded to one another only in points, preferably with the aid of hot needles, and **in that** only when the nonwoven material layers lie one on top of another and the RFID chip and the antenna are embedded is the multilayer structure fused with application of heat and pressure, wherein the first layer (3) free of cutouts is supplied, and is bonded to the second layer (4) having cutouts (11), **in that** RFID chips (10) are inserted into said cutouts (11), the antennas (8) are placed on to the surface of the second layer (4) and then, in a bonding process, in particular preferably in a thermocompression welding or soldering process, the RFID chip (10) is bonded to the antenna (8), **in that** the third layer (5) having registered cutouts (12) for accommodating projecting regions of the RFID chip (10) is bonded, and **in that** the fourth layer (6) free of cutouts is supplied and is bonded to the third layer (5), wherein a paper layer (7) is subsequently applied to the fourth layer (6) and bonded thereto, wherein it is preferably possible for the fourth layer (6) already to be applied as a composite with the paper layer (7) and **in that** a cover material (2) is bonded to the underside of the first layer (3) from below, and **in that**, in a final step, with application of pressure, the layer structure is compressed in such a way that the cavities in the finished multilayer structure are filled to the extent of at least 90%.

18. The method as claimed in any of claims 14-17, **characterized in that** the upper first nonwoven layer (3) and/or the lower second nonwoven layer (6) having an original thickness within the range of 60-150 micrometers, in particular preferably within the range of 90-125 µm is supplied, preferably with an original unfilled grammage within the range of 8-40 g/m², in particular preferably within the range of 15-25 g/m², or respectively preferably with an original grammage within the range of 50-90 g/m² filled with adhesive to the extent of 70-85%.

19. The method as claimed in any of claims 14-17, **characterized in that** the upper second nonwoven layer (4) and/or the lower first nonwoven layer (5) having an original thickness within the range of 150-350 micrometers, in particular preferably within the range of 200-300 µm, is supplied, preferably with an original unfilled grammage within the range of 20-60 g/m², in particular preferably within the range of 30-50 g/m², or respectively preferably with an original grammage within the range of 80-150 g/m² filled with adhesive to the extent of 70-85%.

20. Use of a method as claimed in any of claims 16-19 for producing a cover or an inlay page for a passport, **characterized in that** at least one of the layers (3-6) in particular preferably the second (4) and the third (5) layer is embodied as an anisotropic nonwoven material and **in that** this anisotropic nonwoven material is supplied in such a way that the preferred fiber direction is arranged substantially parallel to the direction of the hinge of the cover of the passport, wherein preferably the individual layers (2-7) or already bonded layers are supplied by roll (13, 14, 22, 23, 32) and are processed in a continuous or cyclically continuous process, and in particular preferably the resulting multilayer structure is either trimmed to a sheet format or collected on a roll.

## Revendications

1. Structure multicouches souple (1) avec une puce RFID (10) et une antenne (8), la puce RFID (10) et l'antenne (8) étant intégrées dans la structure multicouches (1) de sorte à ne pas l'épaissir, au moins l'une des couches (3 à 6) étant constituée d'un tissu de voile dont les cavités sont essentiellement remplies d'une colle thermoplastique souple
**caractérisée en ce qu'**
au moins quatre couches en un tissu de voile sont présentes, dont les cavités sont essentiellement remplies d'une colle souple, une première couche supérieure de voile (3) étant disposée, laquelle est exempte d'évidements, une deuxième couche supérieure de voile (4) étant disposée, laquelle comporte un évidement (11) dans lequel est disposée une première zone partielle de la puce RFID (10), une première couche inférieure de voile (5) étant disposée, laquelle comporte un évidement (12) dans lequel est disposée la zone partielle restante de la puce RFID (10), et comporte une deuxième couche inférieure de voile (6) qui est exempte d'évidements, les couches de voile (3 à 6) étant toutes remplies de la même colle souple et reliées entre elles par matière par cette dernière.

2. Structure multicouches (1) selon la revendication 1, **caractérisée en ce que** les cavités sont remplies à raison d'au moins 90%, de préférence d'au moins 95%.

3. Structure multicouches (1) selon l'une quelconque des revendications précédentes, **caractérisée en ce que** les fibres du tissu en voile sont formées d'une matière plastique, de préférence d'un polymère, de manière particulièrement préférée sur base de polyester et/ou de polyacrylate.

4. Structure multicouches (1) selon l'une quelconque des revendications précédentes, **caractérisée en ce que** les fibres du voile ont une longueur supérieure à 4 mm, de préférence supérieure à 10 mm, s'agissant de manière particulièrement préférée d'un dénommé filé-lié.

5. Structure multicouches (1) selon l'une quelconque des revendications précédentes, **caractérisée en ce qu'**au moins l'une des couches (3 à 6) est constituée d'un voile anisotrope.

6. Structure multicouches (1) selon l'une quelconque des revendications précédentes, **caractérisée en ce qu'**au-dessus de la première couche supérieure de voile (3) est disposée une matière de parement (2) qui est reliée par matière avec la première couche supérieure de voile (3), s'agissant de préférence pour la matière de parement (2) d'une matière plastique qui est scellée sur la face supérieure et/ou qui représente une imitation de cuir et la matière de parement (2) présentant de manière particulièrement préférée une épaisseur de l'ordre de 200 à 450 micromètres.

7. Structure multicouches (1) selon l'une quelconque des revendications précédentes, **caractérisée en ce que** sous la deuxième couche inférieure de voile (6) est disposée une couche de papier (7) qui est reliée par matière avec la deuxième couche inférieure de voile (6) et qui comporte de préférence une structure à pores ouverts vers le bas, la couche de papier comportant de préférence au moins une caractéristique de sécurité et/ou étant teintée dans la masse, respectivement imprimée.

8. Structure multicouches (1) selon l'une quelconque des revendications précédentes, **caractérisée en ce que** pour la colle, il s'agit d'une colle activable, qui ne durcit pas complètement, s'agissant de préférence d'une colle activable sans solvant, de manière particulièrement préférée d'une colle thermoactivable sans solvant et de manière particulièrement préférée d'une colle polyuréthane et/ou polyacrylate sur base aqueuse.

9. Structure multicouches (1) selon l'une quelconque des revendications précédentes, **caractérisée en ce que** le tissu de voile est constitué de fibres choisies dans le groupe des matières plastiques suivantes : PE, PP, PET, PA, PBT, PVC ou des mélanges de telles fibres, de manière particulièrement préférée de fibres sur base de polyester et/ou de polyacrylate.

10. Structure multicouches (1) selon l'une quelconque des revendications précédentes, **caractérisée en ce qu'**entre la première couche supérieure (3) et la deuxième couche supérieure (4) de voile et/ou entre la première couche supérieure de voile (3) et la matière de parement (2) est posée en supplément une couche de barrage pour les rayonnements électromagnétiques ou **en ce que** l'une desdites couches est conçue en tant qu'une telle couche de barrage, de manière particulièrement préférée, une matière choisie dans la liste suivante étant utilisée à cette fin : un film métallique, un tissu métallique, un voile métallique, du papier imprimé/métallisé avec une structure conductrice, un voile ou maillage/tissu, un voile ou un maillage/tissu avec une fraction de fils/fibres métalliques.

11. Structure multicouches (1) selon l'une quelconque des revendications précédentes, **caractérisée en ce qu'**au moins l'une des couches (3 à 7) ou ses éléments constitutifs sont teintés dans la masse et/ou imprimés ou **en ce que** la colle thermoplastique est teintée dans la masse dans au moins l'une des couches (3 à 7), de manière préférée, différentes couches, respectivement de la colle se trouvant dans différentes couches étant teintées dans la masse dans différentes couleurs.

12. Utilisation d'une structure multicouches (1) selon l'une quelconque des revendications précédentes pour la fabrication d'une enveloppe et/ou d'un encart relié pour un livre ou un passeport.

13. Passeport avec une enveloppe, une étiquette de visa ou un encart en une structure multicouches (1) selon l'une quelconque des revendications précédentes 1 à 11 ou carte en une structure multicouches (1) selon l'une quelconque des revendications précédentes 1 à 11.

14. Procédé de fabrication d'une structure multicouches (1) selon l'une quelconque des revendications 1 à 11, **caractérisé en ce qu'**on utilise au moins quatre couches d'un tissu de voile dont les cavités sont essentiellement remplies d'une colle soupe, une première couche supérieure de voile (3) étant disposée, laquelle est exempte d'évidements, une deuxième couche supérieure de voile (4) étant disposée, laquelle comporte un évidement (11) dans lequel est disposée une première zone partielle de la puce RFID (10), sachant qu'on dispose une première couche inférieure de voile (5) qui comporte un évidement (12) dans lequel est disposée la zone partielle restante de la puce RFID (10) et qu'on dispose une deuxième couche inférieure de voile (6) laquelle est exempte d'évidements, qu'on remplit la totalité des couches en voile (3 à 6) avec la même colle souple et on les relie par matière à l'aide de cette dernière, on amène au moins l'une des couches (3 à 6) en un tissu de voile à l'état détendu et non comprimé dont les cavités sont remplies à raison de 70 à 85 % du volume avec de la colle à l'état liquide et lors de la liaison avec d'autres couches (2 à 7) et/ou dans un processus de fusion finale, on compresse le tissu de voile rempli et on le soumet en option à un traitement thermique de telle sorte que les cavités dans la structure multicouches terminées soient remplies à raison d'au moins 90%.

15. Procédé selon la revendication 14, **caractérisé en ce que** l'au moins une couche (3 à 6) en un tissu de voile est au moins scellée en partie sur sa surface et est conçue avec des pores ouverts sur sa surface opposée et **en ce qu'**on amène l'au moins une couche (3 à 6) avec la surface à pores ouverts vers le haut et qu'on la remplit de colle à travers celle-ci et l'au moins une couche (3 à 6) en un tissu de voile étant remplie en au moins deux étapes, de préférence dans le cas d'une épaisseur initiale supérieure à 150 µm, en au moins trois étapes.

16. Procédé selon l'une quelconque des revendications 14 à 15, **caractérisé en ce qu'**on amène d'abord une bande de papier, de préférence une bande de papier siliconé et on la revêt d'une couche de colle, de préférence par application au rouleau, **en ce qu'**on fait sécher ladite couche de colle, on chauffe ledit papier revêtu de la couche de colle et on l'amène en contact avec une bande non usinée de tissu de voile, de préférence en ayant recours à une pression et/ou une température, le tissu de voile étant rempli à partir du côté opposé au papier, en une ou en plusieurs étapes successivement de colle à raison de 70 à 85% et après chacune desdites étapes, ont fait sécher la bande de tissu de voile.

17. Procédé selon l'une quelconque des revendications 14 à 16, **caractérisé en ce qu'**on amène un total d'au moins quatre couches (3 à 6) d'un tissu de voile, chacune des couches étant successivement reliée avec l'autre en amenant d'abord une première couche (6) placée en bas et scellée vers le bas et en la remplissant à raison de 70 à 85% de colle, en amenant ensuite une deuxième couche (5) scellée vers le bas et en la mettant en contact par sa face inférieure avec la face supérieure de la première couche (6) et en créant ensuite, de préférence par utilisation de chaleur et/ou d'une pression une liaison par matière au moins par endroits et/ou par points entre la première et la deuxième couche et ainsi de suite, alors que de préférence, dans une étape finale, par utilisation d'une pression, de manière particulièrement préférée entre deux rouleaux, la structure de couches est comprimée de telle sorte que les cavités dans la structure multicouches soient remplies à raison d'au moins 90% et **en ce que** selon la revendication 14, on amène des bandes préfabriquées de tissu de voile et on les sépare du papier, de préférence juste peu avant leur assemblage avec d'autres bandes en tissu de voile, **en ce qu'**on relie ensemble lesdites bandes tout d'abord seulement par points, de préférence en s'aidant d'aiguilles chaudes et **en ce qu'**une fois que les couches de tissu en voile sont superposées et que la puce RFID et l'antenne sont incorporées, on fait fusionner la structure multicouches par utilisation de chaleur ou d'une pression, la première couche (3) exempte d'évidements étant amenée, reliée avec la deuxième couche (4) avec évidements (11) **en ce qu'**on insère dans lesdits évidements (11) la puce RFID (10), on pose les antennes (8) sur la surface de la deuxième couche (4) et dans un processus de liaison, de manière particulièrement préférée, un soudage par thermocompression ou un processus de brasage, on relie la puce RFID (10) avec l'antenne (8), **en ce qu'**on relie la quatrième couche (5) avec des évidements (12) définis pour recevoir les zones saillantes de la puce RFID (10) et **en ce qu'**on amène la quatrième couche (6) exempte d'évidements et on la relie avec la troisième couche (5), dans la suite, une couche de papier (7) étant appliquée sur la quatrième couche (6) et reliée à cette dernière, alors que de manière préférée il est possible d'appliquer la quatrième couche (6) d'ores et déjà sous la forme d'une liaison composite avec la couche de papier (7) et **en ce qu'**on relie par le dessous une matière de parement (2) avec la face inférieure de la première couche (3) et **en ce que** dans une étape finale, en utilisant une pression, on comprime la structure en couches de telle sorte que les cavités dans la structure multicouches terminée soient remplies à raison d'au moins 90 %.

18. Procédé selon l'une quelconque des revendications 14 à 17, **caractérisé en ce qu'**on amène la première couche supérieure de voile (3) et/ou la deuxième couche inférieure de voile (6) avec une épaisseur initiale de l'ordre de 60 à 150 micromètres, de préférence de l'ordre de 90 à 125 pm, de manière préférée avec un grammage initial à l'état non rempli de l'ordre de 8 à 40 g/m², de manière particulièrement préférée, avec un grammage initial à l'état non rempli de l'ordre de 15 à 25 g/m², de manière respectivement préférée avec un grammage initial rempli à raison de 70 à 85% de colle de l'ordre de 50 à 90 g/m².

19. Procédé selon l'une quelconque des revendications 14 à 17, **caractérisé en ce qu'**on amène la première couche supérieure de voile (4) et/ou la deuxième couche inférieure de voile (5) avec une épaisseur initiale de l'ordre de 150 à 350 micromètres, de manière particulièrement préférée, avec une épaisseur initiale de l'ordre de 200 à 300 pm, de manière préférée avec un grammage initial à l'état non rempli de l'ordre de 20 à 60 g/m², de manière particulièrement préférée, avec un grammage initial à l'état non rempli de l'ordre de 30 à 50 g/m², de manière respectivement préférée avec un grammage initial rempli à raison de 70 à 85% de colle de l'ordre de 80 à 150 g/m².

20. Utilisation d'un procédé selon l'une quelconque des revendications 16 à 19 pour la fabrication d'une enveloppe ou d'un encart pour un passeport, **caractérisé en ce qu'**au moins l'une des couches (3-6), de manière particulièrement préférée, la deuxième (4) et la troisième (5) couche est conçu sous la forme d'un tissu de voile anisotrope et **en ce qu'**on amène ledit tissu de voile anisotrope de telle sorte que la direction préconisée des fibres soit disposée sensiblement à la parallèle de la direction de la charnière de l'enveloppe du passeport, alors que de préférence les couches individuelles (2 à 7) ou des couches déjà reliées sont amenées par rouleau (13, 14, 22, 23, 32) et mises en oeuvre dans un processus continu ou continu cadencé et de manière particulièrement préférée, on coupe à dimensions la structure multicouches résultante dans un format de feuilles ou on la recueille sur rouleau.
